# EUROPEAN PATENT SPECIFICATION

(11) **EP 4 292 030 B1**
(45) Date of publication and mention of the grant of the patent: **22.04.2026**
(21) Application number: 21835518.8
(22) Date of filing: 03.12.2021
(51) Int. Cl.: G06N 20/20

(54) **METHOD(S) AND SYSTEM(S) FOR IMPROVED EFFICIENCY IN FEDERATED LEARNING OF MACHINE LEARNING MODEL(S)**
VERFAHREN UND SYSTEM(E) FÜR VERBESSERTE EFFIZIENZ BEIM FÖDERIERTEN LERNEN VON MASCHINENLERNMODELL(EN)
PROCÉDÉ(S) ET SYSTÈME(S) POUR UNE EFFICACITÉ AMÉLIORÉE DANS L'APPRENTISSAGE FÉDÉRÉ D'UN OU DE PLUSIEURS MODÈLES D'APPRENTISSAGE MACHINE

(30) Priority: 02.12.2021 US 202117541091
(43) Date of publication of application: 20.12.2023
(73) Proprietor: Google LLC, Mountain View, CA 94043 (US)
(72) Inventor: BEAUFAYS, Françoise, Mountain View, California 94043 (US); MOTTA, Giovanni, Mountain View, California 94043 (US); SIM, Khe Chai, Mountain View, California 94043 (US)
(74) Representative: Shipp, Nicholas
(86) International application number: PCT/US2021/061830
(87) International publication number: WO 2023/101689

(56) References cited:
- US-A1- 2021 104 223
- US-A1- 2021 327 421
- ZHONG KAIYANG ET AL: "Communication-Efficient Federated Learning with Multi-layered Compressed Model Update and Dynamic Weighting Aggregation", 6 June 2021, CICAI 2021, ISSN: 0302-9743, XP047617797
- CHEN YANG ET AL: "Communication-Efficient Federated Deep Learning With Layerwise Asynchronous Model Update and Temporally Weighted Aggregation", IEEE TRANSACTIONS ON NEURAL NETWORKS AND LEARNING SYSTEMS, IEEE, USA, vol. 31, no. 10, October 2020 (2020-10-01), pages 4229 - 4238, XP011812794, ISSN: 2162-237X, [retrieved on 20201005], DOI: 10.1109/TNNLS.2019.2953131

## Description

### Background

Federated learning of machine learning (ML) model(s) is an increasingly popular ML technique for training ML model(s). In traditional federated learning, an on-device ML model is stored locally on a client device of a user, and a global ML model, that is a remote-based counterpart of the on-device ML model, is stored remotely at a remote system (e.g., a remote server or a cluster of remote servers). The client device, using the on-device ML model, can process user input detected at the client device to generate predicted output, and can generate a gradient based on the predicted output in a supervised or unsupervised manner. Further, the client device can transmit the gradient to the remote system. The remote system can utilize the gradient, and optionally additional gradients generated in a similar manner at the client device or additional client devices, to update weights of the global ML model. The remote system can transmit the global ML model, or updated weights of the global ML model, to the client device. The client device can then replace the on-device ML model with the updated global ML model, or replace the weights of the on-device ML model with the updated weights of the updated global ML model, thereby updating the on-device ML model.

However, federated learning of ML model(s) may cause a large quantity of resources to be unnecessarily consumed at the client device and/or the client device may have insufficient resources to store and train full-sized ML model(s) locally at the client device. For example, assume an on-device automatic speech recognition (ASR) model is utilized to generate a transcription that is predicted to correspond to a spoken utterance captured in a stream of audio data via microphone(s) of the client device. In this example, the predicted output can correspond to the transcription, or a portion thereof, and the gradient can be generated based on the transcription. In generating the gradient, on-device memory may be consumed by storing activations at each layer of the on-device ASR model, and on-device computational resources may be consumed by computing an error function at each layer of the on-device ASR model and causing the error function to be backpropagated across each layer of the on-device ASR model. As a result, techniques that do not unnecessarily consume on-device memory and on-device computational resources are needed to improve efficiency of federated learning.

ZHONG KAIYANG ET AL: "Communication-Efficient Federated Learning with Multi-layered Compressed Model Update and Dynamic Weighting Aggregation" describes two methods. The first is a federated learning technique with multi-layered compressed model. The second is a dynamic weighting aggregation algorithm considering the size of the dataset, local learning accuracy and the frequency of local model update for each client.

CHEN YANG ET AL: "Communication-Efficient Federated Deep Learning With Layerwise Asynchronous Model Update and Temporally Weighted Aggregation" describes a federated learning technique which proposes an asynchronous learning strategy on the clients and a temporally weighted aggregation of the local models on the server. In the asynchronous learning strategy, different layers of the deep neural networks (DNNs) are categorized into shallow and deep layers, and the parameters of the deep layers are updated less frequently than those of the shallow layers. Furthermore, a temporally weighted aggregation strategy is introduced on the server to use the previously trained local models. The proposed algorithm is empirically on two data sets with different DNNs.

### Summary

The scope of protection of the present invention is defined by the appended set of claims. Implementations disclosed herein are directed to efficient federated learning of machine learning (ML) model(s) at a remote system (e.g., a remote server or cluster of remote servers) based on update(s) generated at client device(s). Processor(s) of a given client device may receive client data, process the client data using a given on-device ML model to generate predicted output, generate a gradient based on the predicted outputs using supervised or unsupervised learning techniques, generate a given update for a given disparate portion of the given on-device ML model based on the gradient, and transmit the given update to the remote system. Further, processor(s) of the remote system may receive the given update from the given client device, and cause a given global ML model (e.g., that is a remote-based counterpart of the given on-device ML model) to be updated based on the given update, thereby updating a given disparate portion of the given global ML model that corresponds to the given disparate portion of the given on-device ML model and without causing any other portions of the given ML model to be updated based on the given update. Notably, this process may be repeated at the given client device (or in parallel at one or more additional client devices) to generate additional given updates for other disparate portions of the given global ML model. As a result, computational resources consumed at the client devices that participate in the federated learning of the ML model(s) may be reduced since the client devices do not generate full updates for the full-size ML model(s), and network resources consumed in transmitting the updates to the remote system may be reduced since less than full updates for the full-size ML model(s) are transmitted to the remote system.

For example, assume audio data capturing a spoken utterance of a human user of "Hey Assistant, turn on the kitchen lights" is generated via microphone(s) of a given client device of the human user. In this example, the audio data capturing the spoken utterance may correspond to the client data. Further, the audio data may be processed using an on-device automatic speech recognition (ASR) model stored in on-device memory of the given client device to generate ASR data, such as one or more speech hypotheses that are predicted to correspond to the spoken utterance captured in the audio data. In this example the one or more speech hypotheses may correspond to the predicted output. Moreover, a gradient may be generated based on processing the audio data and/or one or more of the speech hypotheses using one or more semi-supervised or self-supervised learning techniques described herein. Notably, the on-device ASR model may include a plurality of on-device ASR layers, such as one or more first on-device ASR layers, one or more second on-device ASR layers, one or more third on-device ASR layers, and so on. However, the gradient may be generated for only a disparate portion of the on-device ASR model, such as the one or more first on-device ASR layers, but not for any of the other on-device ASR layers. By generating the gradient for only the one or more first on-device ASR layers, consumption of on-device memory and computational resources at the given client device may be reduced since the given client device does not have to store activation functions for each and every ASR layer of the on-device ASR model to generate the gradient and since the given client device does not have to compare the activation functions to a loss function for each and every ASR layer of the on-device ASR model as in traditional federated learning.

Continuing with the above example, assume the given client device generates a gradient for the one or more first on-device ASR layers. The given client device may further generate a first update for the one or more first on-device ASR layers based on the gradient. In this example, the first update may include, for instance, an indication of the one or more first on-device ASR layers of the on-device ASR model associated with the first update, an indication of one or more first counterpart global ASR layers of a counterpart global ASR model to be updated based on the first update, an indication of the on-device ASR model utilized to generate the first update for the one or more first on-device ASR layers of the on-device ASR model, the gradient generated based on the predicted output, one or more updated first on-device ASR layers of the on-device ASR model that are updated locally at the client device based on the gradient (e.g., in some implementations where the on-device ASR is, in fact, updated locally at the given client device based on the gradient), and/or one or more updated on-device weights for the one or more updated first on-device ASR layers of the on-device ASR model (e.g., in some implementations where the on-device ASR is, in fact, updated locally at the given client device based on the gradient).

In this example, the given client device may transmit the first update to the remote system. In response to receiving the first update, the remote system may cause the one or more first global ASR layers of the global ASR model to be updated based on the first update, resulting in an updated global ASR model. In some instances, the remote system may optionally combine the first update received from the given client device with additional updates received from the given client device or one or more additional client devices. Further, the remote system may transmit the updated global ASR model (e.g., the updated global ASR model itself, one or more updated global ASR layers thereof, and/or one or more updated global weights thereof) back to the client device and/or one or more of the additional client devices. Each of the client devices may replace, in corresponding on-device memory, the on-device ASR model with the updated global ASR model, and continue generating additional updates for the updated global ASR model, and transmitting the additional updates to the remote system to continue updating the updated global ASR model.

Although the above example is described with respect to the client data being audio data that captures a spoken utterance, it should be understood that is for the sake of example and is not meant to be limiting. For instance, the client data can additionally, or alternatively, include vision data, textual data, touch data, and/or any other type of client data generated at the given client device. In these and other instances, the on-device ML models utilized to process the client data may be vision-based ML model(s), text-based ML model(s), and/or touch-based ML model(s). Further, although the above example is described with respect to ASR models utilized to process the audio data, it should be understood that is also for the sake of example and is not meant to be limiting. For instance, other audio-based ML model(s) may additionally or alternatively be utilized to process the client data and be subsequently updated based on the processing of the client data. In these and other instances, the audio-based ML model(s) may include, for example, hotword detection models trained to predict whether the audio data captures a particular word or phrase, a voice activity detection (VAD) model trained to predict whether voice activity of a human is captured in the stream audio data, and/or any other audio-based ML model(s).

In some implementations, and prior to generating the gradient, multiple on-device ML layers may be compressed such that the multiple on-device ML layers are implemented as a single on-device ML layer at the given client device. For example, the given client device may compress a first on-device ML layer and a second on-device ML layer into one or more first on-device ML layers based on a scheduling signal generated by an on-device scheduling engine of the given client device and/or received from a remote scheduling engine. The scheduling signal may include an indication of the on-device ML layers to be compressed prior to generating the gradient. In some versions of those examples, the first on-device ML layer and the second on-device ML layer may be compressed into the one or more first on-device ML layers prior to generating the predicted output and prior to generating the gradient, whereas in additional or alternative examples, the first on-device ML layer and the second on-device ML layer may be compressed into the one or more first on-device ML layers subsequent to generating the predicted output but prior to generating the gradient. Notably, neither the first on-device ML layer nor the second on-device ML layer are dropped out. Rather, compressing the first on-device ML layer and the second on-device ML layer into the one or more first ML layers imposes a constraint on the on-device ML model.

Further, an additional client device, and prior to generating an additional gradient (e.g., based on additional client data received at the additional client device), multiple on-device ML layers may also be compressed such that the multiple on-device ML layers are implemented as a single on-device ML layer at the additional client device. Continuing with the above example, at least the second on-device ML layer and a third on-device ML layer of the on-device ML model into one or more second ML layers at the additional client device. The additional client device may compress the second on-device ML layer and the third on-device ML layer of the on-device ML model into the one or more second ML layers in the same or similar manner described above, but based on a scheduling signal generated by an on-device scheduling engine of the additional client device and/or received from a remote scheduling engine. Notably, in this example, the second on-device ML layer is compressed into both the one or more first on-device ML layers at the client device and the one or more second on-device ML layers at the additional client device. However, the one or more first on-device ML layers and the one or more second on-device ML layers each include at least one unique on-device ML layer - the first on-device ML layer for the one or more first on-device ML layers and the third on-device ML layer for the one or more second on-device ML layer. Nonetheless, it should be understood that this is for the sake of example and is not meant to be limiting. For instance, the same on-device ML layers can be compressed at disparate client devices (e.g., the first on-device ML layer and the second on-device ML layer being compressed into the one or more first ML layers at both the client device and the additional client device), disparate ML layers can be compressed at disparate client devices such that there is at least one unique ML layer compressed at the disparate devices, and/or disparate ML layers can be compressed at disparate client devices such that there is only unique ML layers compressed at the different devices. Although differences may exist between these disparate ML layers, they are adjacent in the on-device ML model and may include some overlap. Accordingly, by generating the first update and the second update as shared updates, the remote system can leverage this overlap to conserve computational and/or network resources as described herein, thereby resulting in improved efficiency in federated learning.

In some implementations, the remote scheduling engine may divide a superset of client devices into a plurality of subsets. In some versions of those implementations, each of the subsets of client devices may perform an iteration of a gradient snapshotting technique in updating the given global ML model. For example, the remote system may cause the given client device to generate the update for one or more Nth on-device ML layers of the given on-device ML model based on processing the client data received at the client device, where *N* is a positive integer. Further, the remote system may cause an additional client device to generate an additional update for one or more *Nth-1* on-device ML layers of the given on-device ML model based on processing additional client data received at the additional client device. Put another way, the system may employ the gradient snapshotting technique to improve efficiency of federated learning of ML model(s). The gradient snapshotting technique may be implemented based on corresponding scheduling signals generated by a corresponding on-device scheduling engine of the client device and/or the additional client device and/or received from the remote scheduling engine. The corresponding scheduling signals may instruct the client device to generate the first update for the one or more Nth on-device ML layers of the on-device ML model, the additional client device to generate the second update for the one or more *Nth-1* on-device ML layers of the on-device ML model, a further additional client device to generate a third update for one or more *Nth-2* on-device ML layers of the on-device ML model, and so on. Accordingly, by utilizing the gradient snapshotting technique, the remote system can ensure that an update is generated for each of the Nth layers on-device ML model as described herein.

In some versions of those implementations, the remote scheduling engine may divide a superset of client devices into a plurality of subsets. In some versions of those implementations, each of the subsets of client devices may perform an iteration of the gradient snapshotting technique. For example, a first subset of client devices may include a first client device may generate an update for the one or more Nth on-device ML layers, a second client device may generate an update for the one or more *Nth-1* on-device ML layers, a third client device may generate an update for the one or more *Nth-2* on-device ML layers, and so on for each of the Nth on-device ML layers. Further, a second subset of client devices may generate an update for each of the Nth on-device ML layers in the same or similar manner. Accordingly, when the updates are sent to the remote system, it may be ensured that the remote system has updates for each of the disparate portions of ML model available for updating.

In some implementations, the unsupervised learning utilized to the gradient may correspond to a semi-supervised learning technique, such as a teacher-student approach. For example, the predicted output can be generated based on processing the client data using the on-device ML model as described in the above example. Further, benchmark output can be generated based on processing the client data using a benchmark ML model. In this example, the benchmark ML model may be of a same type as the on-device ML model and the global ML model, and the benchmark output may be utilized as a supervision signal for generating the gradient. For instance, a benchmark ML model may correspond to a benchmark ASR model that is utilized to generate one or more benchmark speech hypotheses based on processing audio data. Further, an on-device ASR model may generate one or more of the speech hypotheses based on processing the audio as described in the above example. In this instance, one or more of the benchmark speech hypotheses may be compared to one or more of the speech hypotheses to generate the gradient for the one or more first on-device ASR layers.

In some versions of those implementations, the predicted output may only be generated using the on-device ASR model and/or the gradient may only be utilized in generating the update in response to determining that one or more conditions are satisfied. The one or more conditions can include, for example, whether the predicted output satisfies a predicted output threshold, whether the benchmark output satisfies a benchmark output threshold, and/or other conditions. Put another way, the predicted output may only be generated using the on-device ASR model and/or the gradient may only be utilized in generating the update in response to determining that the benchmark output provides a sufficient supervision signal.

In additional or alternative implementations, the unsupervised learning utilized to generate the gradient can correspond to a self-supervised learning technique. In self-supervised learning, a target portion of client data may be identified. The target portion of the client data may be subsequent to a prepended portion of the client data and may be prior to an appended portion of the client data. Further, the target portion of the client data may be masked using various masking techniques. The target portion of the client data may be selected arbitrarily, or selected based on one or more criteria such as a particular segment between *n* and *m* seconds of audio data corresponds to the target portion, a portion of vision data corresponding to a center portion of an image corresponds to the target portion, a center portion of textual data corresponds to the target portion, and/or any other criteria for selecting the target portion of the client data. In some implementations when the client data corresponds to audio data, the target portion of the client data may correspond to a target audio waveform portion of the corresponding stream of audio data, the prepended portion of the client data may correspond to a prepended audio waveform portion that is received prior to the target audio waveform portion, and the appended portion of the client data may correspond to an appended audio waveform portion that is received subsequent to the target audio waveform portion. In additional or alternative implementations when the client data corresponds to audio data, the client data may correspond to a representation of the audio, such as a vector representation of the audio data and/or other representations of the audio data. In these implementations, the target portion of the client data may correspond to a target representation portion of the audio data, the prepended portion of the client data may correspond to a prepended representation portion that precedes the target representation portion, and the appended portion of the client data may correspond to an appended representation portion that follows subsequent to the target representation portion. In additional or alternative implementations, the client data may correspond to textual data or vision data. In these implementations, the target portion, the prepended portion, and the appended portion may be identified in the same or similar manner, and the target portion may be masked.

In implementations when the unsupervised learning utilized to the gradient corresponds to the self-supervised learning technique described above, the prepended portion of the client data and the appended portion of the client data may be processed using the on-device ML model to generate the predicted output that predict the target portion of the client data. For example, in implementations where the target portion of the client data corresponds to the target audio waveform portion of the corresponding stream of audio data, further assume the audio data captures a spoken utterance. In this example, the prepended audio waveform portion and the appended audio waveform portion may be processed using the on-device ASR model to generate the predicted output. In this example, the predicted output may correspond to a predicted target audio waveform and/or predicted audio features that is predicted to correspond to the target audio waveform portion and/or audio features of the target audio waveform portion. Put another way, the self-supervised learning technique may attempt to reconstruct the target audio waveform portion and/or the audio features thereof based on processing the prepended audio waveform portion and the appended audio waveform portion. Also, for example, in implementations where the target portion of the client data corresponds to the target representation portion of the corresponding stream of audio data, the prepended portion and the appended portion may be processed in the same or similar manner to predict the target portion. Further, the predicted output may be compared to the target portion that was masked to generate the gradient. Put another way, the actual target portion of the client data that was masked may be utilized as a supervision signal with which the predicted output may be compared. Moreover, based on the comparison, the gradient may be generated and utilized to generate the update.

In various implementations, the gradient may additionally or alternatively be generated using supervised learning. For example, again assume audio data capturing a spoken utterance of a human user of "Hey Assistant, turn on the kitchen lights" is generated via microphone(s) of a given client device of the human user. In this example, the audio data capturing the spoken utterance may correspond to the client data. Further, the audio data may be processed using an on-device ASR model stored in on-device memory of the given client device to generate ASR data, such as one or more speech hypotheses that are predicted to correspond to the spoken utterance captured in the audio data. In this example the one or more speech hypotheses may correspond to the predicted output, and a given speech hypothesis may be selected as corresponding to the spoken utterance and provided for presentation to the user as a transcription via a display of the given client device. Moreover, in this example, further assume that the user corrects one or more terms of the transcription. The corrected one or more terms of the transcription may be utilized as a supervision signal in generating the gradient for one or more of the first on-device ASR layers. For instance, the given client device may compare the one or more terms of the transcription to the one or more of the corrected terms of the transcription to generate the gradient for one or more of the first on-device ASR layers.

By using the techniques described herein, various technical advantages can be achieved. As one non-limiting example, by generating the updates based on gradients that are specific to particular portions of on-device ML models, consumption of both on-device memory and computational resources can be reduced at client devices that participate in federated learning of ML model(s). For example, the client devices store less data in generating the gradients and perform less processing in generating the gradient by only generating the gradients that are specific to the particular portion of the on-device ML models. Further, consumption of network resources can also be reduced since the updates transmitted to the remote system include less data as a function of the updates being generated based on these gradients that are specific to the particular portion of the on-device ML models. According to the invention, the remote system schedules these updates at the different client devices to enable the remote system to receive updates for the entirety of a global ML model even though no single client device generates an update for the entirety of the global ML model. As a result, the global ML models (and the on-device ML models when the global ML models are transmitted back to the client devices) have greater precision and/or recall while enabling each of the client devices that participate in the federated learning of the ML models to consume less on-device resources.

The above description is provided as an overview of some implementations of the present disclosure. Further description of those implementations, and other implementations, are described in more detail below.

### Brief Description of the Drawings

FIG. 1 depicts an example process flows that demonstrate various aspects of the present disclosure, in accordance with various implementations.
FIG. 2 depicts a block diagram of an example environment in which implementations disclosed herein may be implemented.
FIG. 3 depicts a flowchart illustrating an example method of client-side operations to achieve efficient federated learning of machine learning model(s), in accordance with various implementations.
FIG. 4 depicts a flowchart illustrating an example method of techniques utilized in achieving efficient federated learning of machine learning model(s), in accordance with various implementations.
FIG. 5 depicts a flowchart illustrating another example method of techniques utilized in achieving efficient federated learning of machine learning model(s), in accordance with various implementations.
FIG. 6 depicts a flowchart illustrating yet another example method of techniques utilized in achieving efficient federated learning of machine learning model(s), in accordance with various implementations.
FIG. 7 depicts a flowchart illustrating an example method of remote system-side operations to achieve efficient federated learning of machine learning model(s), in accordance with various implementations.
FIG. 8 depicts an example architecture of a computing device, in accordance with various implementations.

### Detailed Description

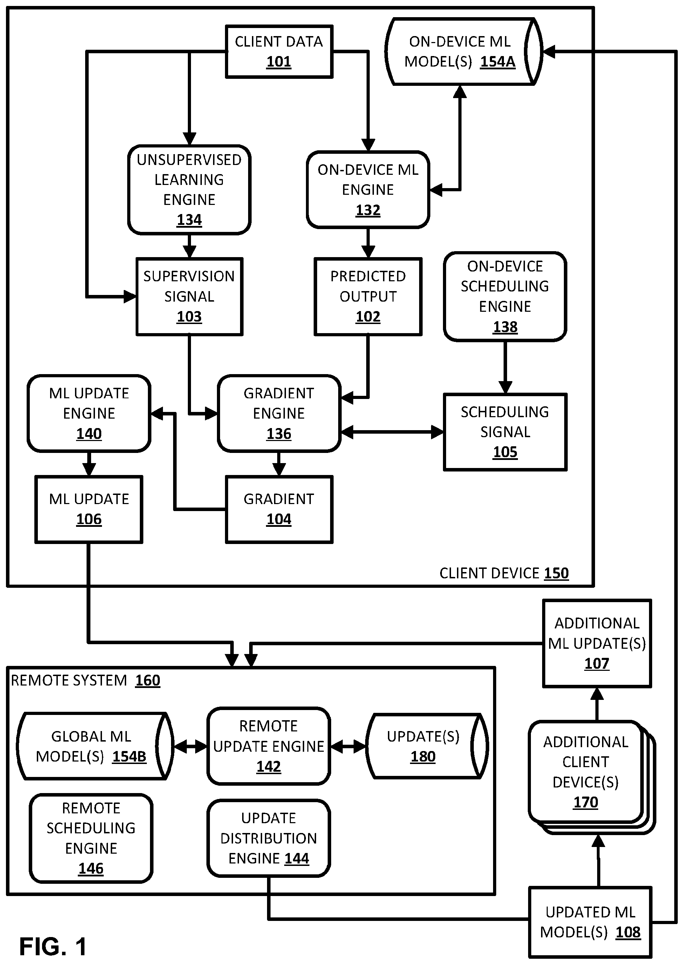

FIG. 1 depicts an example process flows that demonstrate various aspects of the present disclosure. A client device 150 is illustrated in FIG. 1, and includes at least the components that are encompassed within the box of FIG. 1 that represents the client device 150. The client device 150 can receive client data 101 via various components and/or sensors. For example, the client data 101 received at the client device 150 can include spoken utterances captured in audio data generated via one or more microphones of the client device 150, typed input captured in textual data generated via a touch-sensitive display of the client device 150 or peripheral device in communication with the client device 150 *(e.g.,* a keyboard integral with the client device 150 or an external keyboard), touch input based captured in touch data generated via the touch-sensitive display of the client device 150 one or more buttons of the client device 150 (e.g., one or more hardware buttons and/or software buttons), gesture input captured in vision data generated via one or more vision components of the client device 150, and/or any other type of client data 101 that can be received by the client device 150 via other components and/or sensors.

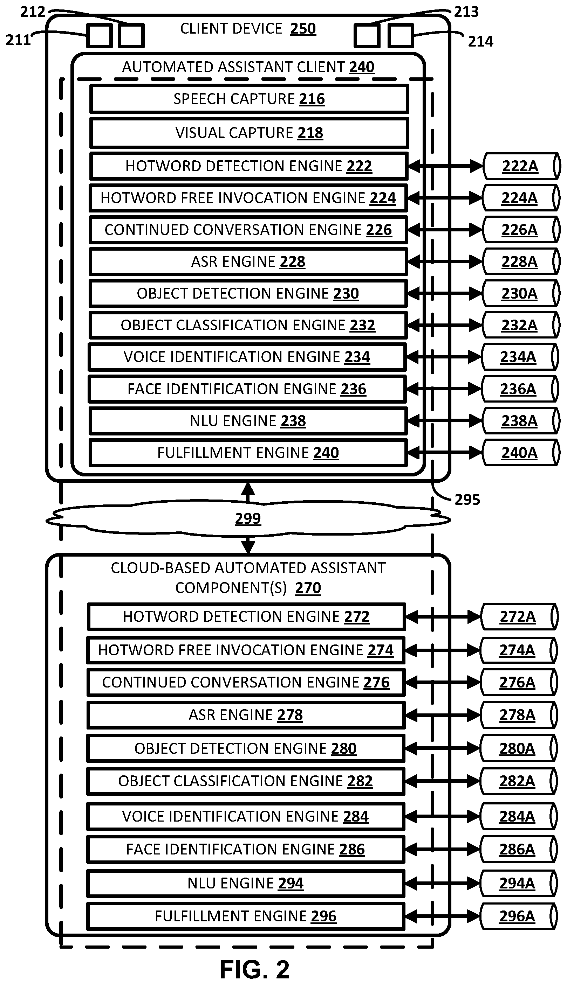

Further, the client device 150 may include various on-device machine learning (ML) models stored in on-device memory of the client device 150, such as in on-device ML model(s) database 154A. In some implementations, and based on processing the client data 101, the on-device ML models can be utilized to cause certain fulfillment of the client data 101 to be performed (e.g., as described in more detail with respect to FIG. 2). In additional or alternative implementations, and based on processing the client data 101, the on-device ML models can be updated locally at the client device 150 and/or the on-device ML models can be utilized in generating one or more updates at the client device 150 for counterpart global ML models that are stored remotely in remote memory of a remote system 160 *(e.g.,* a remote server or cluster of remote servers), such as in global ML model(s) database 154B (e.g., as described in more detail with respect to FIGS. 1, 3, 4, 5, 6, and 7). The remote system includes at least the components that are encompassed within the box of FIG. 1 that represents the remote system 160. The client device 150 and the remote system 160 are communicatively coupled over one or more networks (e.g., over one or more local area networks (LANs) and/or wide area networks (WANs)) for transmitting and receiving data therebetween.

As described herein, implementations are directed to improved efficiency of federated learning of ML model(s). Similar to traditional federated learning, on-device ML engine 132 may process, using one or more on-device ML models stored in the on-device ML model(s) database 154A, the client data 101 to generate predicted output 102. The one or more on-device ML models utilized by the on-device ML engine 132 may depend on a type of the client data 101 received at the client device 150. For example, assume the client data 101 corresponds to audio data generated via one or more microphones of the client device 150. In this example, the on-device ML engine 132 may utilize one or more audio-based ML models to process the client data 101 in generating the predicted output 102, such as an automatic speech recognition (ASR) model, a hotword detection model, a continued conversation model, a voice identification model, a voice activity detection (VAD) model, an endpointing model, and/or other audio-based ML models. Further, the predicted output 102 (and/or predicted values associated therewith, such as probabilities, log likelihoods, binary values, and/or any other predicted values) in this example may be based on the one or more audio-based ML models utilized in processing the client data 101, such as one or more predictions described with respect to the audio-based ML models of FIG. 2. Also, for example, additionally or alternatively assume the client data 101 corresponds to vision data generated via one or more vision components of the client device 150. In this example, the on-device ML engine 132 may utilize one or more vision-based ML models to process the client data 101 in generating the predicted output 102, such as an object detection model, an object classification model, a face identification model, and/or other vision-based ML models. Further, the predicted output 102 (and/or predicted values associated therewith, such as probabilities, log likelihoods, binary values, and/or any other predicted values) in this example may be based on the one or more vision-based ML models utilized in processing the client data 101, such as one or more predictions described with respect to the vision-based ML models of FIG. 2. Also, for example, additionally or alternatively assume the client data 101 corresponds to textual data or touch data generated via one or more user interface input components of the client device 150 (or generated based on processing audio data and/or vision data). In this example, the on-device ML engine 132 may utilize one or more text-based ML models and/or touch-based ML models to process the client data 101 in generating the predicted output 102, such as natural language understanding (NLU) model, a fulfillment model, and/or other text-based ML models and/or touch-based ML models. Further, the predicted output 102 (and/or predicted values associated therewith, such as probabilities, log likelihoods, binary values, and/or any other predicted values) in this example may be based on the one or more text-based ML models and/or touch-based ML models utilized in processing the client data 101, such as one or more predictions described with respect to the text-based ML models and/or touch-based ML models of FIG. 2.

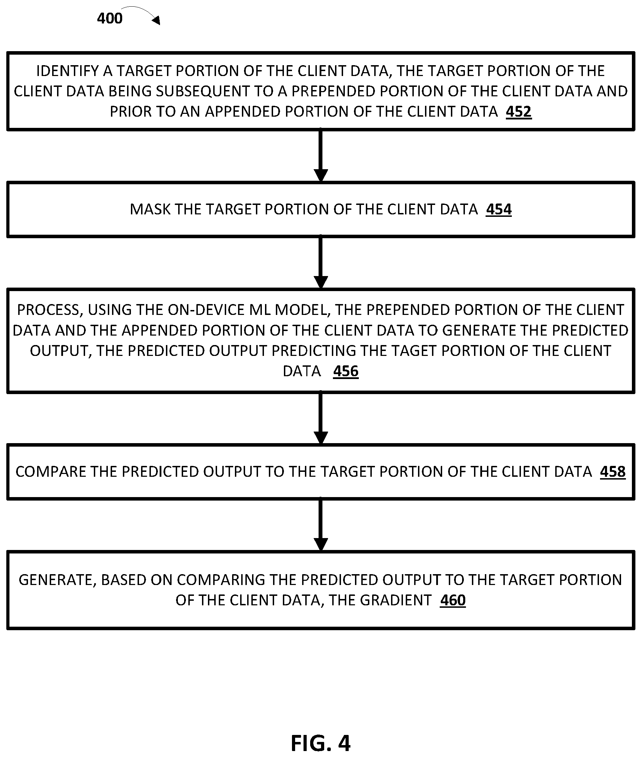

In various implementations, to cause the on-device ML models to be updated locally at the client device 150 and/or the on-device ML models to be utilized in generating the one or more updates at the client device 150 for the counterpart global ML models, the client device 150 can cause the predicted output 102 to be provided to a gradient engine 136. The gradient engine can compare the predicted output 102 with a supervision signal 103 to generate a gradient 104. In some implementations, the supervision signal 103 may be an implicit supervision signal generated using an unsupervised learning engine 134. The unsupervised learning engine 134 can utilize one or more self-supervised learning techniques and/or semi-supervised learning techniques (e.g., as described with respect to FIG. 4) to generate the supervision signal 103 in instances where a supervision signal is not available based on explicit user feedback (e.g., feedback from a human user of the client device 150 and/or feedback from a human annotator of the client data 101), which is typical in federated learning of ML model(s) due to privacy considerations. For example, assume the client data 101 corresponds to audio data generated via one or more microphones of the client device 150, and further assume that the on-device ML engine 132 processes the audio data, using an on-device ASR model, to generate and select a given speech hypotheses that is predicted to correspond to a spoken utterance captured in the audio data. In this example, the unsupervised learning engine 134 can utilize the one or more self-supervised learning techniques and/or semi-supervised learning techniques described herein to generate the supervision signal 103 even if a human user of the client device 150 does not provide any explicit feedback with respect accuracy of the given speech hypotheses. In additional or alternative implementations, the supervision signal 103 may be an explicit supervision signal generated based on the client data 101 and the unsupervised learning engine 134 may optionally be omitted (e.g., feedback from a human user of the client device 150). For example, again assume the client data 101 corresponds to audio data generated via one or more microphones of the client device 150, and again assume that the on-device ML engine 132 processes, using an on-device ASR model, the audio data to generate and select a given speech hypotheses that is predicted to correspond to a spoken utterance captured in the audio data. However, further assume that a human user of the client device 150 corrects one or more terms or phrases of the given speech hypotheses. In this example, the correction may be captured in the client data 101 and utilized as the supervision signal 103 without using the unsupervised learning engine 134. However, in this example, the unsupervised learning engine 134 can additionally or alternatively utilize the one or more self-supervised learning techniques and/or semi-supervised learning techniques described herein to generate an additional or alternative supervision signal.

In some implementations, the gradient 104 (and other gradients) may be derived from a loss function used to train the ML model(s) (e.g., the on-device ML model(s) and/or the global ML model(s)), such that the gradient represents a value of that loss function (or a derivative thereof) obtained from a comparison of the supervision signal 103 to the predicted output 102. For example, when the supervision signal 103 and the predicted output 102 match, the gradient engine 136 can generate a zero gradient. Also, for example, when the supervision signal 103 and the predicted output 102 do not match, the gradient engine 136 can generate a non-zero gradient that is optionally dependent on the extent of the mismatching. The extent of the mismatching can be based on an extent of mismatching between deterministic comparisons of the supervision signal 103 to the predicted output 102. In additional or alternative implementations, the gradient 104 (and other gradients) may be derived from a loss function used to train the ML model(s), such that the gradient 104 represents a value of that loss function (or a derivative thereof) determined based on the predicted output 102 (e.g., without considering any supervision signals).

In some versions of those implementations, the gradient 104 (and other gradients) may be specific to particular ML layers of a given ML model. For example, again assume the client data 101 corresponds to audio data generated via one or more microphones of the client device 150, and again assume that the on-device ML engine 132 processes, using an on-device ASR model, the audio data to generate and select a given speech hypotheses that is predicted to correspond to a spoken utterance captured in the audio data. Further assume the on-device ASR model includes at least one or more first on-device ASR layers and one or more second on-device ASR layers. In this example, the loss function and/or the value of that loss function may be specific to the one or more first on-device ASR layers and/or specific to the one or more second on-device ASR layers. For instance, a first loss function or a first value of the first loss function may be utilized to generate the gradient 104 for the one or more first ASR layers, and a second loss function or a second value of the first loss function may be utilized to generate the gradient 104 for the one or more second ASR layers. Additionally, or alternatively, the gradient 104 for the one or more first ASR layers may be generated in this manner at the client device 150, and no gradient for the one or more second ASR layers may be generated at the client device 150. Rather, a gradient for the one or more second ASR layers may be generated at one or more additional client devices 170 in the same or similar described with respect to generating the gradient 104 at the client device 150. Each of the one or more additional client devices 170 may include corresponding instances of at least the components that are encompassed within the box of FIG. 1 that represents the client device 150.

Notably, in traditional federated learning, a plurality of client devices (e.g., the client device 150 and one or more of the additional client devices 170) each generate a corresponding gradient for a corresponding on-device ML model based on corresponding client data received a given one of the plurality of client devices. For example, each of the plurality of client devices may have a corresponding counterpart on-device ML model stored in corresponding on-device memory, and process the corresponding client data to generate gradients for the corresponding instances of the corresponding on-device ML models. Although the gradients in this example are generated at disparate client devices, the gradients are generated for the corresponding counterpart on-device ML models. Further, the remote system 160 may utilize the corresponding gradients (or corresponding updates generated based on the corresponding gradients) to update a remote-based counterpart of the corresponding counterpart on-device ML models. However, in traditional federated learning, the corresponding gradients (or the corresponding updates generated based on the corresponding gradients), are typically for the corresponding counterpart on-device ML models as a whole. In contrast, to improve efficiency in federated learning, the corresponding gradients generated according to the invention are only for a portion of the corresponding counterpart on-device ML models. As a result, consumption of computational resources and memory at each of the plurality of client devices may be reduced since the corresponding gradients generated based on the corresponding client data may only be for a portion of the corresponding counterpart on-device ML models, and consumption of network resources in transmitting the corresponding gradients to the remote system 160 may be reduced.

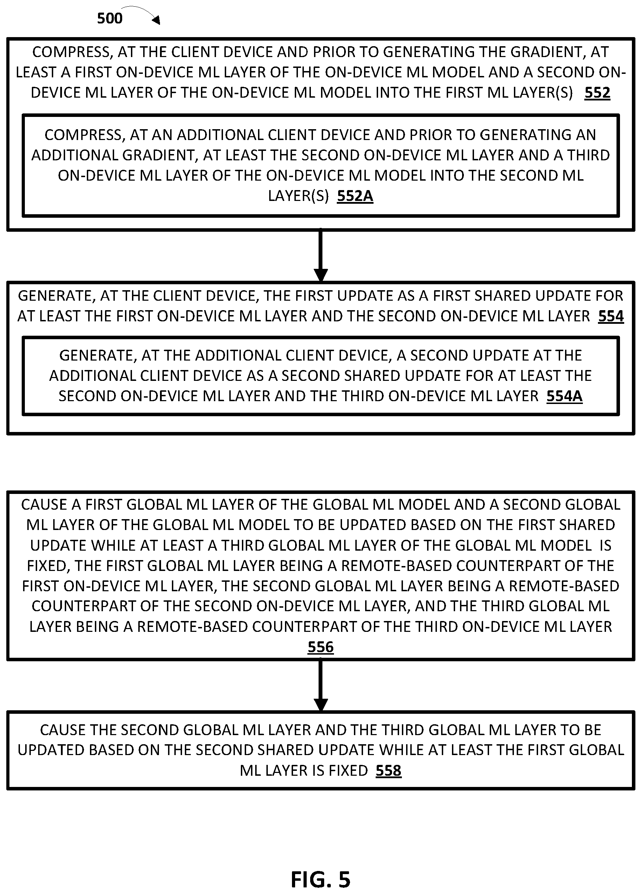

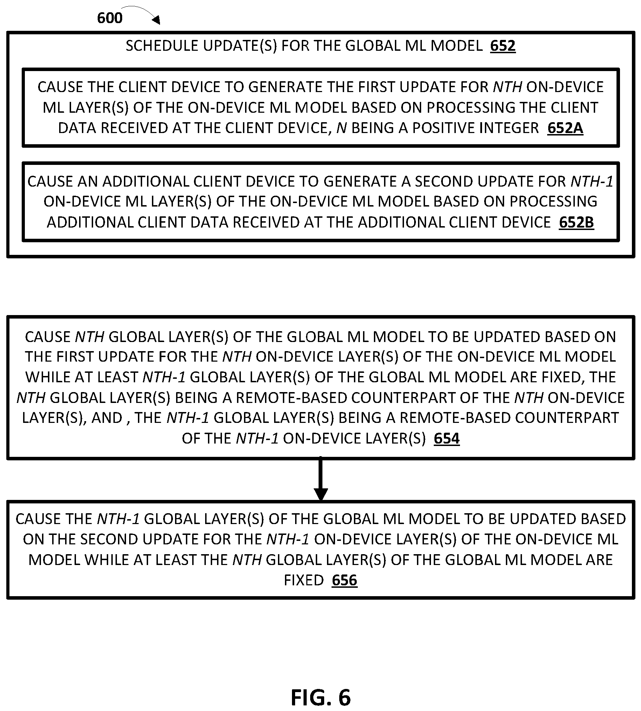

Accordingly, according to the invention, the client device 150 (and one or more of the additional client devices 170) includes on-device scheduling engine 138 to ensure the corresponding gradients are generated for disparate portions of the corresponding counterpart on-device ML models at each of the plurality of client devices. The on-device scheduling signal 138 generates a scheduling signal 105 that is provided to the gradient engine 136 to ensure the client device 150 is generating the gradient for the appropriate on-device ML layers of the corresponding on-device ML model. The on-device scheduling engine 138 of the client device 150 instructs the gradient engine 136 to generate the gradient 104 for one or more first on-device ML layers of the corresponding counterpart on-device ML model via the scheduling signal 105. Further, a corresponding on-device scheduling engine of one or more of the additional client devices 170 may instruct a corresponding gradient engine to generate a corresponding gradient for one or more second on-device ML layers of the corresponding counterpart on-device ML model via a corresponding scheduling signal. The scheduling signal 105 for the client device 150 and the corresponding scheduling signals for one or more of the additional client devices 170 may be received at each of the client devices from a remote scheduling engine 146 of the remote system (e.g., as described with respect to FIGS. 5 and 6).

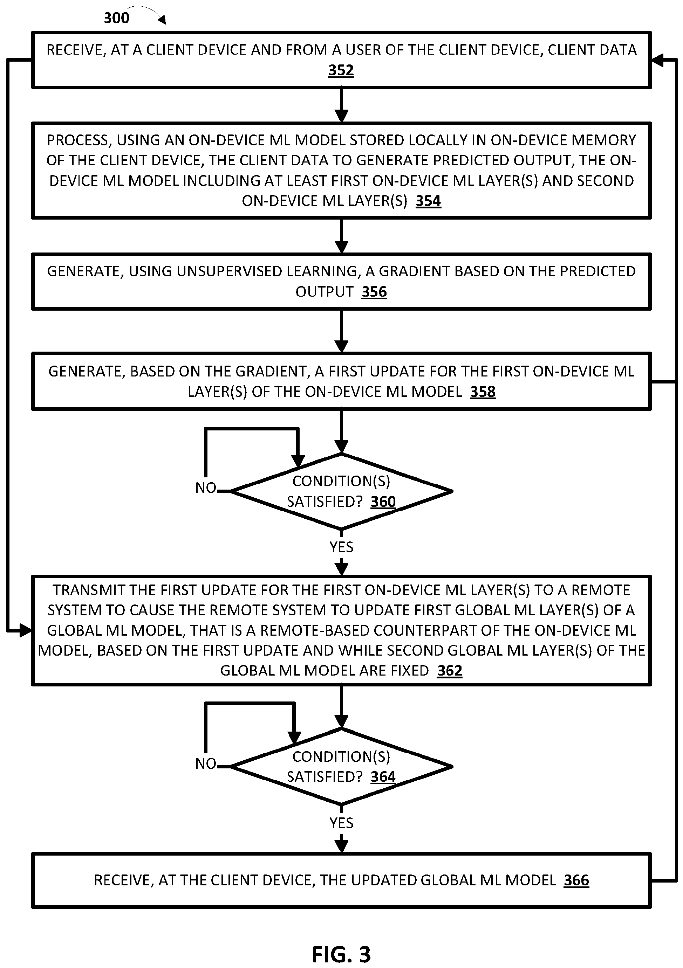

In some implementations, the gradient engine 136 can cause the gradient 104 to be stored in on-device memory of the client device 150 along with other gradients generated at the client device 150 until one or more client device conditions are satisfied (e.g., described with respect to FIG. 3) to cause the gradient 104 (and other gradients) to be transmitted to the remote system 160. In additional or alternative implementations, the gradient engine 136 can cause the gradient 104 to be provided to ML update engine 140. The ML update engine 140 can generate a ML update 106 based on the gradient 104 that includes an indication of the type of global ML model to be updated based on the ML update 106 *(e.g.,* an ASR update when the ML update 106 if generated based on a gradient for an ASR model, a hotword update when the ML update 106 if generated based on a gradient for a hotword model, and so on). In some implementations, the ML update 106 can include the gradient 104 and an indication of one or more global ML layers of a global ML model to be updated based on the gradient. For example, assume the on-device scheduling engine 138 instructs the gradient engine 136 to generate the gradient 104 for one or more first on-device ML layers of the corresponding counterpart on-device ML model via the scheduling signal 105. In this example, the ML update engine 140 can generate the ML update 106 to include the gradient 104 for the one or more first on-device ML layers and an indication that the gradient 104 should be utilized to update one or more first global ML layers of a corresponding counterpart global ML model. Further, assume a corresponding on-device scheduling engine instructs a given one of the additional client devices 170 instructs a corresponding gradient engine to generate a corresponding gradient for one or more second on-device ML layers of the corresponding counterpart on-device ML model via a corresponding scheduling signal. In this example, a corresponding ML update engine can generate an additional ML update 107 to include the corresponding gradient for the one or more second on-device ML layers and an indication that the corresponding gradient should be utilized to update one or more second global ML layers of the corresponding counterpart global ML model. Notably, in these examples, the corresponding on-device ML model is not updated locally at the client device 150 or the given one of the additional client devices 170 based on the gradient 104 or the corresponding gradient, respectively.

In additional or alternative implementations, the ML update engine 140 can cause the corresponding counterpart on-device ML model to be updated based on the gradient 104. Continuing with the above example, again assume the on-device scheduling engine 138 instructs the gradient engine 136 to generate the gradient 104 for one or more first on-device ML layers of the corresponding counterpart on-device ML model via the scheduling signal 105. In this example, the ML update engine 140 can cause the gradient 104 to be backpropagated across the one or more first on-device ML layers to update one or more corresponding first on-device weights of the one or more first on-device ML layers, and while the one or more second on-device ML layers (and/or other on-device ML layers) are fixed (e.g., not updated), thereby resulting in one or more updated first on-device ML layers. Further, the same process may be repeated at the given one of the additional client devices 170 to update one or more corresponding second on-device weights of the one or more second on-device ML layers, and while the one or more first on-device ML layers (and/or other on-device ML layers) are fixed, thereby resulting in one or more updated second on-device ML layers.

In some versions of these additional or alternative implementations, the ML update 106 can include the one or more updated first on-device ML layers and an indication of one or more global ML layers of a global ML model that should be replaced in the remote memory of the remote system 160 with the one or more updated first on-device ML layers. Continuing with the above example, the ML update 106 may include an indication that the one or more first global ML layers of the corresponding counterpart global ML model should be replaced with the one or more updated first on-device ML layers. Similarly, the additional ML update 107 may include an indication that the one or more second global ML layers of the corresponding counterpart global ML model should be replaced with the one or more updated second on-device ML layers.

In other versions of these additional or alternative implementations, the ML update 106 can include the one or more updated first on-device weights for the one or more first updated on-device ML layers and an indication of one or more global weights a global ML model that should be replaced in the remote memory of the remote system 160 with the one or more updated first on-device weights. Continuing with the above example, the ML update 106 may include an indication that one or more first global weights of the one or more first global ML layers of the corresponding counterpart global ML model should be replaced with the one or more updated first on-device weights for the one or more first updated on-device ML layers. Similarly, the additional ML update 107 may include an indication that one or more second global weights of the one or more second global ML layers of the corresponding counterpart global ML model should be replaced with one or more updated second on-device weights for the one or more second updated on-device ML layers.

Put another way, in traditional federated learning, the corresponding counterpart global ML model may be updated in a distributed manner in that the corresponding counterpart global ML model is updated based on gradients (e.g., the gradient 104 and/or one or more additional gradients) or updates (e.g., the ML update 106 and/or one or more of the additional ML updates 107) generated at a plurality of client devices. However, a considerable amount of computational and network resources may be consumed at each of the plurality of client devices in generating these gradients or updates. Accordingly, by utilizing techniques described herein, both computational and network resources that would otherwise be consumed at each of the plurality of client devices may be conserved by enabling each of the client devices to generate and transmit less data compared to traditional federated learning.

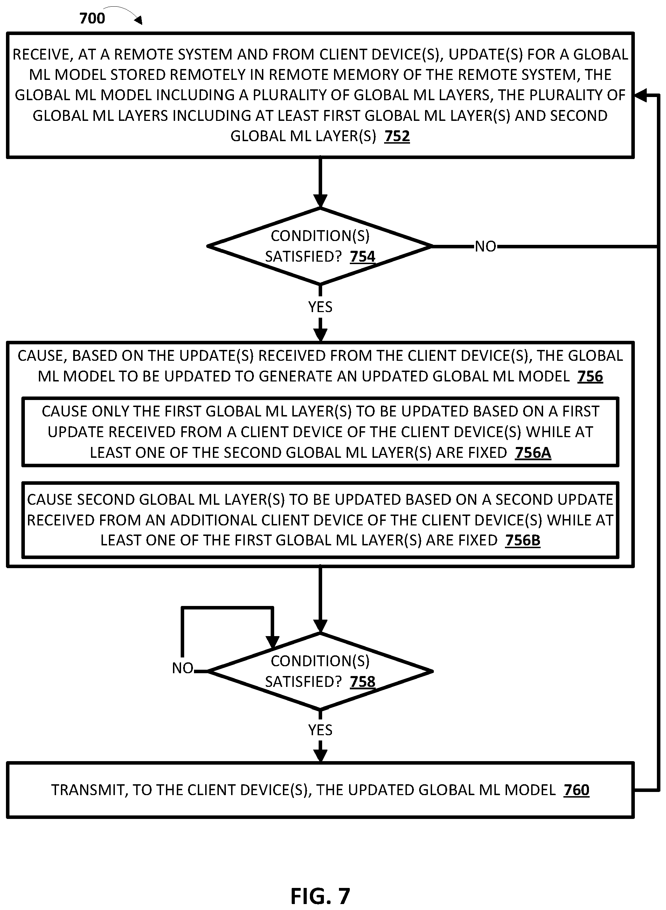

The remote update engine 142 can utilize at least the ML update 106 received from the client device 150 and/or one or more of the additional ML updates 107 to update one or more of the global ML models stored in the global ML model(s) database 154B. In some implementations, the ML update 106 received from the client device 150 and/or one or more of the additional ML updates 107 may be stored in an update(s) database 180 when they are received at the remote system 160. In some versions of those implementations, the remote update engine 142 may obtain the updates to update one or more of the global ML models when one or more remote system conditions are satisfied (e.g., as described with respect to FIG. 7). In additional or alternative implementations, the remote update engine 142 may update one or more of the global ML models as the ML update 106 is received from the client device 150 and/or as one or more of the additional ML updates 107 is received from one or more of the additional client devices 170.

Notably, the remote update engine 142 may update the corresponding global ML models in various manners based on a type of the ML update 106 is received from the client device 150 and/or as one or more of the additional ML updates 107 is received from one or more of the additional client devices 170. For example, the remote update engine 142 can identify a particular global ML model, from among the global ML models stored in the global ML model(s) database 154B, to update global layers and/or global weights thereof. In some implementations, the remote update engine 142 can identify the particular global ML model based on the indication of the type of global ML model to be updated based on the ML update 106 and/or one or more of the additional ML updates 107. For example, if a plurality of updates for an ASR model are received and/or stored in the update(s) database 180, the remote update engine 142 can identify the corresponding counterpart global ASR model to be updated. Further, how the remote update engine 142 updates the corresponding counterpart global ASR model may be based on content of the ML update 106 and/or one or more of the additional ML updates 107. For instance, if a given update includes a gradient and indicates that is it for one or more first on-device ASR layers of an on-device ASR model, then the remote update engine 142 may backpropagate the gradient across one or more corresponding counterpart first global ASR layers of a corresponding counterpart global ASR model while at least one or more second global ASR layers of the corresponding counterpart global ASR model are fixed. Also, for instance, if a given update includes one or more first updated on-device ASR layers of an on-device ASR model and/or one or more updated first on-device weights for the one or more first updated on-device ASR layers of the on-device ASR model, then the remote update engine 142 may replace one or more global ASR layers of a corresponding counterpart ASR model with the one or more first updated on-device ASR layers and/or replace one or more first global weights for the one or more global ASR layers with the one or more updated first on-device weights for the one or more first updated on-device ASR layers of the on-device ASR model. In various implementations, updates stored in the update(s) database 180 may include updates of different types. In these implementations, the remote update engine 142 may utilize one or more criteria to determine how and/or when to utilize the different types of updates. The one or more criteria may indicate which types of updates should be prioritized over other types of updates. As one non-limiting example, the one or more criteria may indicate that updates that replace layers and/or weights should be prioritized over updates that include gradients, but it should be understood that other criteria are contemplated herein. Further, in some implementations, the remote update engine 142 can identify a single global ML model to be updated at a given time instance, whereas in other implementations, the remote update engine 142 can identify multiple global ML models to be updated, in parallel, at the given time instance.

In some implementations, the remote update engine 142 can assign the updates to specific iterations of updating of one or more of the global ML models based on one or more criteria. The one or more criteria can include, for example, the types of updates available to the remote update engine 142, a threshold quantity of updates available to the remote update engine 142 (and optionally for the disparate portions of the one or more global ML models), a threshold duration of time of required to perform the updates, and/or other criteria. In particular, the remote update engine 142 can identify multiple sets or subsets of updates generated by the client devices 150 and/or 170. Further, the remote update engine 142 can update one or more of the global ML models based on these sets or subsets of the updates. In some further versions of those implementations, a quantity of updates in the sets or subsets may be the same or vary. In yet further versions of those implementations, each of the sets or subsets of updates can optionally include updates from at least two unique client devices. In other implementations, the remote update engine 142 may utilize the updates to update one or more of the global ML models in a first in, first out (FIFO) manner without assigning any update to a specific iteration of updating of one or more of the global ML models.

Update distribution engine 144 can transmit one or more of the updated global ML models 108 (e.g., including the updated global ML model itself, updated layers thereof, and/or updated weights thereof) to the client device 150 and/or one or more of the additional client devices 170. In some implementations, the update distribution engine 144 can transmit one or more of the updated global ML models 108 in response to one or more remote system conditions being satisfied at the remote system 160 and/or one or more client device conditions being satisfied at the client device 150 and/or one or more of the additional client device 170 *(e.g.,* as described with respect to FIGS. 3 and 7). Notably, one or more of the updated global ML models 108 may be transmitted to the client device 150 and/or one or more of the additional client device 170 in a synchronous manner or asynchronous manner. Upon receiving one or more of the updated global ML models 108, one or more of the updated global ML models 108 can replace the corresponding on-device ML model counterpart stored in the on-device memory thereof with one or more of the updated global ML models 108. Further, the client devices 150 and/or 190 may subsequently use one or more of the updated on-device ML model(s) to make predictions based on further client data received at the client device 150 and/or one or more of the additional client device 170 *(e.g.,* as described with respect to FIG. 2). The client device 150 and/or one or more of the additional client device 170 can continue transmitting the updates to the remote system 160 in the manner described herein. Further, the remote system 160 can continue updating one or more of the global ML models in the manner described herein.

Turning now to FIG. 2, a client device 250 is illustrated in an implementation where various on-device ML engines are included as part of (or in communication with) an automated assistant client 240 is depicted. The respective ML models are also illustrated interfacing with the various on-device ML engines. Other components of the client device 250 are not illustrated in FIG. 2 for simplicity. FIG. 2 illustrates one example of how the various on-device ML engines of and their respective ML models can be utilized by the automated assistant client 240 in performing various actions.

The client device 250 in FIG. 2 is illustrated with one or more microphones 211, one or more speakers 212, one or more vision components 213, and display(s) 214 *(e.g.,* a touch-sensitive display). The client device 250 may further include pressure sensor(s), proximity sensor(s), accelerometer(s), temperature sensor(s), magnetometer(s), and/or other sensor(s) that are used to generate sensor data. The client device 250 at least selectively executes the automated assistant client 240. The automated assistant client 240 includes, in the example of FIG. 2, hotword detection engine 222, hotword free invocation engine 224, continued conversation engine 226, ASR engine 228, object detection engine 230, object classification engine 232, voice identification engine 234, and face identification engine 236. The automated assistant client 240 further includes speech capture engine 216 and visual capture engine 218. It should be understood that the ML engines and ML models depicted in FIG. 2 are provided for the sake of example, and are not meant to be limiting. For example, the automated assistant client 240 can further include additional and/or alternative engines, such as a text-to-speech (TTS) engine and a respective TTS model, a voice activity detection (VAD) engine and a respective VAD model, an endpoint detector engine and a respective endpoint detector model, a lip movement engine and a respective lip movement model, and/or other engine(s) along with associated ML model(s). Moreover, it should be understood that one or more of the engines and/or models described herein can be combined, such that a single engine and/or model can perform the functions of multiple engines and/or models described herein.

One or more cloud-based automated assistant components 270 can optionally be implemented on one or more computing systems (collectively referred to as a "cloud" computing system) that are communicatively coupled to client device 250 via one or more networks as indicated generally by 299. The cloud-based automated assistant components 270 can be implemented, for example, via a cluster of high-performance servers. In various implementations, an instance of the automated assistant client 240, by way of its interactions with one or more of the cloud-based automated assistant components 270, may form what appears to be, from a user's perspective, a logical instance of an automated assistant as indicated generally by 295 with which the user may engage in a human-to-computer interactions (e.g., typed interactions, spoken interactions, gesture-based interactions, and/or touch-based interactions).

The client device 250 can be, for example: a desktop computing device, a laptop computing device, a tablet computing device, a mobile phone computing device, a computing device of a vehicle of the user (e.g., an in-vehicle communications system, an in-vehicle entertainment system, an in-vehicle navigation system), a standalone interactive speaker, a smart appliance such as a smart television (or a standard television equipped with a networked dongle with automated assistant capabilities), and/or a wearable apparatus that includes a computing device (e.g., a watch of the user having a computing device, glasses of the user having a computing device, a virtual or augmented reality computing device). Additional and/or alternative client devices may be provided.

The one or more vision components 213 can take various forms, such as monographic cameras, stereographic cameras, a LIDAR component (or other laser-based component(s)), a radar component, etc. The one or more vision components 213 may be used, e.g., by the visual capture engine 218, to capture image data corresponding to vision frames (e.g., image frames, laser-based vision frames) of an environment in which the client device 250 is deployed. In some implementations, such vision frame(s) can be utilized to determine whether a user is present near the client device 250 and/or a distance of a given user of the client device 250 (e.g., the user's face) relative to the client device 250. Such determination(s) can be utilized, for example, in determining whether to activate the various on-device ML engines depicted in FIG. 2, and/or other engine(s). Further, the speech capture engine 218 can be configured to capture spoken utterance(s) and/or other audio data captured via the one or more of the microphones 211.

As described herein, such audio data and/or other non-audio sensor data such as vision data and textual data (also collectively referred to herein as client data) can be processed by the various engines depicted in FIG. 2 to make predictions at the client device 250 using corresponding ML models and/or at one or more of the cloud-based automated assistant components 270 using corresponding ML models updated in the manner described with respect to FIGS. 1, 3, 4, 5, 6, and 7.

As some non-limiting example, the respective hotword detection engines 222, 272 can utilize respective hotword detection models 222A, 272A to predict whether audio data includes one or more particular words or phrases to invoke the automated assistant 295 (e.g., "Ok Assistant", "Hey Assistant", "What is the weather Assistant?", etc.) or certain functions of the automated assistant 295 (e.g., "Stop" when an alarm is sounding or music is playing, "Next" when viewing images or listening to music, etc.); the respective hotword free invocation engines 224, 274 can utilize respective hotword free invocation model 224A, 274A to predict whether non-audio sensor data (e.g., vision data) includes a gesture or signal to invoke the automated assistant 295 (e.g., based on a gaze of the user and optionally further based on mouth movement of the user); the respective continued conversation engines 226, 276 can utilize a respective continued conversation model 226A, 276A to predict whether further audio data is directed to the automated assistant 295 (e.g., or directed to an additional user in the environment of the client device 250); the respective ASR engines 228, 278 can utilize a respective ASR model 228A, 278A to generate recognized text, or predict phoneme(s) and/or token(s) that correspond to audio data detected at the client device 250 and generate the recognized text based on the phoneme(s) and/or token(s); the respective object detection engines 230, 280 can utilize a respective object detection model 230A, 280A to predict object location(s) included in vision data captured at the client device 250; the respective object classification engines 232, 282 can utilize a respective object classification model 232A, 282A to predict object classification(s) of object(s) included vision data captured at the client device 250; the respective voice identification engines 234, 284 can utilize a respective voice identification model 234, 284A to predict whether audio data captures a spoken utterance of one or more users of the client device 250 (e.g., by generating a speaker embedding, or other representation, that can be compared to a corresponding actual embeddings for one or more of the user of the client device 250); and the respective face identification engines 236, 286 can utilize a respective face identification model 236A, 286A to predict whether image data captures one or more of the users in an environment of the client device 250 (e.g., by generating an image embedding, or other representation, that can be compared to a corresponding image embeddings for one or more of the user of the client device 250). Each of these various ML models (and other ML models) can be updated in the manner described herein.

In some implementations, the client device 250 and one or more of the cloud-based automated assistant components 270 may further include natural language understanding (NLU) engines 238, 294 and fulfillment engine 240, 296, respectively. The NLU engines 238, 294 may perform natural language understanding, utilizing respective NLU models 238A, 294A, on recognized text, predicted phoneme(s), and/or predicted token(s) generated by the ASR engines 228, 278 to generate NLU data. The NLU data can include, for example, intent(s) that correspond to the spoken utterance and optionally slot value(s) for parameter(s) for the intent(s). Further, the client device 250 and one or more of the cloud-based automated assistant components 270 may further include fulfillment engines 240, 296, respectively. The fulfillment engines 240, 296 can generate fulfillment data utilizing respective fulfillment models or rules 240A, 296A, and based on processing the NLU data. This fulfillment data can define certain fulfillment that is responsive to user input (e.g., spoken utterances, typed input, touch input, gesture input, and/or any other type of user input) provided by a user of the client device 250. The certain fulfillment can include interaction(s) to perform with locally installed application(s) based on the user input, command(s) to transmit to Internet-of-things (IoT) device(s) (directly or via corresponding remote system(s)) based on the user input, and/or other resolution action(s) to perform based on the user input. The fulfillment data is then provided for local and/or remote performance/execution of the determined action(s) to cause the certain fulfillment of the user input to be performed. Execution can include, for example, rendering local and/or remote responses (e.g., visually and/or audibly rendering (optionally utilizing an on-device TTS module)), interacting with locally installed applications, transmitting command(s) to loT device(s), and/or other action(s). In other implementations, the NLU engines 238, 294 and the fulfillment engines 240, 296 may be omitted, and the ASR engines 228, 278 can generate the fulfillment data directly based on the user input. For example, assume one or more of the ASR engines 228, 278 process, using the respective ASR model 228A, 278A, a spoken utterance of "turn on the lights." In this example, the ASR engines 228, 278 can generate a semantic output that is then transmitted to a software application associated with the lights and/or directly to the lights that indicates that they should be turned on, and optionally a transcription of the spoken utterance to be visually rendered for presentation to a user that provided the spoken utterance.

Notably, the cloud-based automated assistant component(s) 270 include remote-based counterparts to the engines and models described herein with respect to FIG. 2. However, in some implementations, these engines and models may not be utilized since the engines and models may be transmitted directly to the client device 250, stored in on-device memory of the client device 150, and executed locally at the client device 250, whereas in other implementations, these engines and models may be utilized exclusively when the client device 250 detects any user input (e.g., text-based, audio-based, vision-based, etc.) and transmits the user input to the cloud-based automated assistant component(s) 270. In various implementations, these engines and models executed at the client device 250 the cloud-based automated assistant component(s) 270 may be utilized in conjunction with one another in a distributed manner. Nonetheless, a remote execution module can optionally be included that performs remote execution based on local or remotely generated NLU data and/or fulfillment data. Additional and/or alternative remote engines can be included. As described herein, in various implementations on-device speech processing, on-device image processing, on-device NLU, on-device fulfillment, and/or on-device execution can be prioritized at least due to the latency and/or network usage reductions they provide when resolving a spoken utterance (due to no client-server roundtrip(s) being needed to resolve the spoken utterance). However, one or more cloud-based automated assistant component(s) 270 can be utilized at least selectively. For example, such component(s) can be utilized in parallel with on-device component(s) and output from such component(s) utilized when local component(s) fail. For example, if any of the on-device engines and/or models fail (e.g., due to relatively limited resources of client device 250), then the more robust resources of the cloud may be utilized.

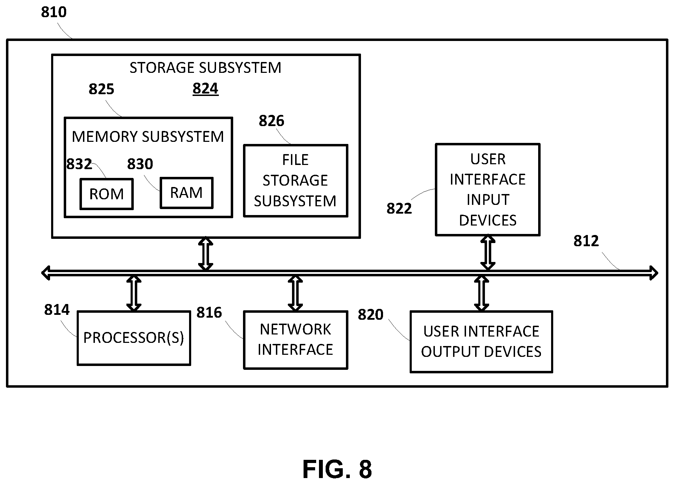

Turning now to FIG. 3, a flowchart illustrating an example method 300 of client-side operations to achieve efficient federated learning of machine learning (ML) model(s) is depicted. For convenience, the operations of the method 300 are described with reference to a system that performs the operations. The system of method 300 includes one or more processors and/or other component(s) of a computing device (e.g., client device 150 of FIG. 1, client device 250 of FIG. 2, computing device 810 of FIG. 8, and/or other computing devices). Moreover, while operations of the method 300 are shown in a particular order, this is not meant to be limiting. One or more operations may be reordered, omitted, or added.

At block 352, the system receives, at a client device and from a user of the client device, client data. The client data may be one or more of various types. The various types of client data can include, for example, audio data generated via microphone(s) of the client device, vision data generated via vision component(s), textual data or touch data generated via user interface input component(s) of the client device (e.g., via a touchscreen display, a mouse and keyboard, and/or other user interface components), and/or any other client data. In some implementations, the client data may be directed to automated assistant (e.g., to cause visual and/or audible content to be provided, to cause an loT device to be controlled, etc.), whereas in other implementations, the client may be provided independent of an automated assistant (e.g., dictating an email or note without interacting with an automated assistant, etc.).

At block 354, the system processes, using an on-device ML model stored in on-device memory of the client device, the client data to generate predicted output, the on-device ML model including at least one or more first on-device ML layers and one or more second on-device ML layers. The on-device ML model utilized to generate the predicted output may be based on the type of client data received at block 352. For example, in implementations where the client data received at block 352 is audio data, the system may utilize an on-device audio-based ML model to process the client data to generate the predicted. Further, the predicted output may be based on a type of the audio-based ML model utilized to process the client data. For instance, if the on-device audio-based ML model is an on-device ASR model, then the predicted output may be a predicted speech hypothesis that is predicted to correspond to a spoken utterance (if any) captured in the audio data. Also, for instance, if the on-device audio-based ML model is an on-device hotword detection model, then the predicted output may include an indication of whether the audio data is predicted to include a particular word or phrase that invokes or otherwise controls an automated assistant.

At block 356, the system generates, using unsupervised learning, a gradient based on the predicted output. Generating the gradient using unsupervised learning is described in more detail herein (e.g., with respect to FIGS. 1 and 4). At block 358, the system generates, based on the gradient, a first update for the one or more first on-device ML layers of the on-device ML model. As noted above with respect to FIG. 1, the first update may include, for example, an indication of the one or more first on-device ML layers of the on-device ML model associated with the first update, an indication of one or more first counterpart global ML layers of a counterpart global ML model to be updated based on the first update, an indication of the on-device ML model utilized to generate the first update for the one or more first on-device ML layers of the on-device ML model, the gradient generated based on the predicted output, one or more updated first on-device ML layers of the on-device ML model that are updated locally at the client device based on the gradient, and/or one or more updated on-device weights for the one or more updated first on-device ML layers of the on-device ML model.

The system returns to block 352 to receive additional client data and performs a subsequent iteration of the operations of blocks 352-358. In some implementations, and during the subsequent iteration of the operations of blocks 352-358, the system may generate an additional first update for the one or more first on-device ML layers of the on-device ML model. In additional or alternative implementations, and during the subsequent iteration of the operations of blocks 352-358, the system may generate a second update for the one or more second on-device ML layers of the on-device ML model. For example, the client device may be utilized to generate first updates for only the one or more first on-device ML layers of the on-device ML model, or the client device may alternate between generating first updates and second updates for the disparate on-device ML layers of the on-device ML model. In some implementations, a scheduling engine (e.g., the on-device scheduling engine 138 of FIG. 1) may instruct the client device to generate the first update for one or more particular on-device ML layers using a scheduling signal. In some versions of those implementations, the on-device scheduling engine may generate the scheduling signal based on data received from the remote system. Put another way, the remote system can instruct a plurality of client devices, including the client device that received the client data at block 352 and at least one additional client device, to generate updates for disparate portions of counterpart on-device ML models, and the remote system can combine the updates for the disparate portions of the counterpart on-device ML model to update the entirety of a counterpart global ML model.

At block 360, the system determines whether one or more client device conditions are satisfied for transmitting the first update (and/or any other updates generated during one or more subsequent iterations of the operations of blocks 352-358) to a remote system. The one or more client device conditions may include, for example, a particular time of day, a particular day of week, whether the client device is charging, whether the client device has at least a threshold state of charge, whether a temperature of the client device is less than a temperature threshold, and/or whether the client device is being held by a user. If, at an iteration of block 360, the system determines that the one or more client device conditions are not satisfied, then the system continues monitoring for satisfaction of the one or more client device conditions at block 360. Notably, while the system continues monitoring for satisfaction of the one or more client device conditions at block 360, the system may continue generating updates via subsequent iterations of the operations of blocks 352-358. If, at an iteration of block 360, the system determines that the one or more client device conditions are satisfied, then the system proceeds to block 362.

At block 362, the system transmits the first update for the one or more first on-device ML layers to a remote system to cause the remote system to update one or more first global ML layers of a global ML model, that is a remote-based counterpart of the on-device ML model, based on the first update and while one or more second global ML layers of the global ML model are fixed. Notably, the global ML model is a remote-based counterpart of the on-device ML model and includes the one or more first global ML layers and the one or more second global ML layers. Accordingly, the one or more first global ML layers may be a remote-based counterpart of the one or more first on-device ML layers. However, the first update described with respect to FIG. 3 as a non-limiting example is only utilized for updating the one or more first global ML layers while the one or more second global ML layers are fixed (e.g., not updated based on the first update). As a result, at least one additional update may be needed at the remote system to update the one or more second global ML layers. In some implementations, the at least one update needed to update the one or more second global ML layers may be generated at a subsequent iteration of the operations of blocks 352-358 as noted above. In additional or alternative implementations, the at least one update needed to update the one or more second global ML layers may be generated at an additional client device based on additional client data received at the additional client device.

At block 364, the system determines whether one or more remote system conditions are satisfied for transmitting the updated global ML model (e.g., the updated global ML model itself, one or more updated global ML layers of the updated global ML model, or one or more updated global weights of the updated global ML model) to the client device. The one or more remote system conditions may include, for example, a particular time of day, a particular day of week, whether a threshold quantity of updates have been utilized to update the updated global ML model, and/or whether performance of the updated global ML model satisfies a performance threshold. If, at an iteration of block 364, the system determines that the one or more client device conditions are not satisfied, then the system continues monitoring for satisfaction of the one or more remote system conditions at block 364. Notably, while the system continues monitoring for satisfaction of the one or more remote system conditions at block 364, the system may continue updating the global ML model based on updates received from the client device and/or one or more additional client devices. If, at an iteration of block 364, the system determines that the one or more remote system conditions are satisfied, then the system proceeds to block 366.

At block 366, the system receives, at the client device, the updated global ML model (*e.g*., including the updated global ML model itself, one or more updated global ML layers thereof, and/or one or more updated global weights thereof). Although not depicted for the sake of brevity, the client device may only receive the updated global model in response to determining one or more client device conditions are satisfied (*e.g.,* as described with respect to the operations of block 360). In response to receiving the updated global ML model, the client device may replace, in the on-device memory of the client device, the on-device ML model with the updated global ML model, resulting in an updated on-device ML model. However, the client device (and one or more additional client devices) may continue generating additional updates for the updated on-device ML model, and an instance of the updated global ML model may be maintained at the remote system to be further updated based on the additional updates.

Although the method 300 of FIG. 3 is only described with respect to a single client device, it should be understood that is for the sake of example and is not meant to be limiting. For example, a plurality of additional client devices may employ the operations of the method 300 of FIG. 3 to generate updates for the global ML model. Further, as described herein, a scheduling engine (e.g., executed locally at each of the client devices and/or remotely at the remote system) can schedule generating of the updates for disparate portions of a corresponding on-device ML model executed locally at each of the client devices, thereby ensuring the remote system receives updates for each of the disparate portions of a counterpart global ML model.

Turning now to FIG. 4, a flowchart illustrating an example method 400 of techniques utilized in achieving efficient federated learning of machine learning (ML) model(s) is depicted. In particular, the method 400 of FIG. 4 illustrates a non-limiting example of generating a gradient (*e.g*., as described with respect to block 356 of the method 300 of FIG. 3). For convenience, the operations of the method 400 are described with reference to a system that performs the operations. The system of method 400 includes one or more processors and/or other component(s) of a computing device (*e.g*., client device 150 of FIG. 1, client device 250 of FIG. 2, computing device 810 of FIG. 8, and/or other computing devices). Moreover, while operations of the method 400 are shown in a particular order, this is not meant to be limiting. One or more operations may be reordered, omitted, or added.

At block 452, the system identifies a target portion of the client data (*e.g*., the client data received at an iteration of the operations of block 352 of FIG. 3), the target portion of the client data being subsequent to a prepended portion of the client data and prior to an appended portion of the client data. At block 454, the system masks the target portion of the client data. The target portion of the client data may be selected arbitrarily, or selected based on one or more criteria such as a particular segment between *n* and *m* seconds of audio data corresponds to the target portion, a portion of vision data corresponding to a center portion of an image corresponds to the target portion, a center portion of textual data corresponds to the target portion, and/or any other criteria for selecting the target portion of the client data. In some implementations, the client data may correspond to audio data. In these implementations, the target portion of the client data may correspond to a target audio waveform portion of the corresponding stream of audio data, the prepended portion of the client data may correspond to a prepended audio waveform portion that is received prior to the target audio waveform portion, and the appended portion of the client data may correspond to an appended audio waveform portion that is received subsequent to the target audio waveform portion. Further, the system can mask the target audio waveform portion using various masking techniques. In additional or alternative versions of those implementations, the client data may correspond to a representation of the audio data based on processing of the audio data, such as a vector representation of the audio data, ASR data generated based on processing the corresponding stream of audio data, and/or other representations of the audio data. In these implementations, the target portion of the client data may correspond to a target representation portion of the audio data, the prepended portion of the client data may correspond to a prepended representation portion that precedes the target representation portion, and the appended portion of the client data may correspond to an appended representation portion that follows subsequent to the target representation portion. Further, the system can mask the target representation portion using various masking techniques. In additional or alternative versions of those implementations, the client data may correspond to textual data or vision data. In these implementations, the system can identify the target portion, the prepended portion, and the appended portion in the same or similar manner, and the system can mask the target portion using various masking techniques.

At block 456, the system processes, using the on-device ML model, the prepended portion of the client data and the appended portion of the client data to generate predicted outputs, the predicted output predicting the target portion of the client data. For example, in implementations where the target portion of the client data corresponds to the target audio waveform portion of the audio data, further assume the audio data captures a spoken utterance. In this example, the system can process, using an on-device ASR model, the prepended audio waveform portion and the appended audio waveform portion to generate the predicted output. In this example, the predicted output may correspond to a predicted target audio waveform and/or one or more predicted features of the predicted target audio waveform (e.g., a predicted amplitude, a predicted wavelength, a predicted phase, a predicted period, and/or other features) that are predicted to correspond to the target audio waveform portion. Additionally, or alternatively, the predicted output may more generally correspond to predicted target audio data and/or one or more predicted features of the predicted audio data (e.g., predicted MFCCs, predicted melbank features, and/or other features) that are predicted to correspond to the target audio data. Put another way, the system may attempt to reconstruct the target audio waveform portion and/or features of the audio data based on processing the prepended audio waveform portion and the appended audio waveform portion.

Notably, in implementations where the on-device ASR model is utilized to reconstruct the target audio waveform portion, the on-device ASR model may be a multilingual on-device ASR model since a primary language of a given client device that generated the audio data may be irrelevant to reconstructing the target audio waveform portion. However, in various implementations, the system may additionally, or alternatively, process the prepended audio waveform portion and the appended audio waveform portion using one or more on-device ASR models that are specific to the primary language of the given client device that generated audio data. Also, for example, in implementations where the target portion of the client data corresponds to the target representation portion of the audio data, further assume the audio data captures a spoken utterance. In this example, the system can process, using an on-device ASR model and/or an on-device NLU model, the prepended representation portion and the appended representation portion to generate the predicted output. In this example, the predicted output may correspond to a predicted target representation that is predicted to correspond to the target representation portion. Put another way, the system may attempt to reconstruct the target representation portion based on processing the prepended representation portion and the appended representation portion.

At block 458, the system compares the predicted output to the target portion of the client data. At block 460, the system generates, based on comparing the predicted output to the target portion of the client data, the gradient. Put another way, the system may utilize the actual target portion of the client data that was masked at block 454 as a supervision signal with which the predicted output that is predicted to correspond to the target portion may be compared at block 458. Further, based on the comparison, the system may generate the gradient. The system may perform additional iterations of the method 400 of FIG. 4 in generating gradients as additional client data is received.

Although the method 400 of FIG. 4 is primarily described with respect to the client data corresponding to audio data, it should be understood that is for the sake of example and is not meant to be limiting. Rather, it should be understood that the techniques described with respect to the method 400 of FIG. 4 can be utilized to generate one or more gradients using any of the global ML models described herein, such as other vision-based ML models and/or text-based ML models. Moreover, although the method 400 of FIG. 4 is described with respect to generating the gradient using self-supervised learning, it should be understood that is for the sake of example and is not meant to be limiting. For example, the method 400 of FIG. 4 may additionally or alternatively utilize explicit feedback from a human user in generating the gradient, such as corrections to a transcription generated using an on-device ASR model, an object classification generated using an on-device object classification model, an invocation generated using an on-device hotword model or on-device hotword free model, and so on. Also, for example, the method 400 of FIG. 4 may additionally or alternatively utilize semi-supervised learning in generating the gradient, such as utilizing a teacher-student approach at the client device.

Turning now to FIG. 5, a flowchart illustrating another example method 500 of techniques utilized in achieving efficient federated learning of machine learning (ML) model(s) is depicted. In particular, the method 500 of FIG. 5 illustrates a non-limiting example of generating updates for an on-device ML model (e.g., as described with respect to block 358 of the method 300 of FIG. 3), and causing a counterpart global ML model to be updated based on the updates (e.g., as described with respect to block 362 of the method 300 of FIG. 3). For convenience, the operations of the method 500 are described with reference to a system that performs the operations. The system of method 500 includes one or more processors and/or other component(s) of a computing device (*e.g*., client device 150 of FIG. 1, client device 250 of FIG. 2, remote system 160 of FIG. 1, cloud-based automated assistant components 270 of FIG. 2, computing device 810 of FIG. 8, and/or other computing devices). Moreover, while operations of the method 500 are shown in a particular order, this is not meant to be limiting. One or more operations may be reordered, omitted, or added.

At block 552, the system compresses, at the client device (e.g., the client data received at an iteration of the operations of block 352 of FIG. 3) and prior to generating the gradient (e.g., the gradient generated at an iteration of the operations of block 356 of FIG. 3), at least a first on-device ML layer of the on-device ML model and a second on-device ML layer of the on-device ML model into the one or more first ML layers. The client device may compress the first on-device ML layer and the second on-device ML layer into the one or more first on-device ML layers based on a scheduling signal generated by an on-device scheduling engine of the client device (*e.g*., the on-device scheduling engine 138 of FIG. 1) and/or received from a remote scheduling engine (*e.g*., the remote scheduling engine 146 of FIG. 1). The scheduling signal may include an indication of the on-device ML layers to be compressed prior to generating the gradient. In some implementations, the first on-device ML layer and the second on-device ML layer may be compressed into the one or more first on-device ML layers prior to generating the predicted output and prior to generating the gradient, whereas in other implementations, the first on-device ML layer and the second on-device ML layer may be compressed into the one or more first on-device ML layers subsequent to generating the predicted output but prior to generating the gradient. Notably, neither the first on-device ML layer nor the second on-device ML layer are dropped out. Rather, compressing the first on-device ML layer and the second on-device ML layer into the one or more first ML layers imposes a constraint on the on-device ML model.

Further, at block 552A, the system compresses, at an additional client device and prior to generating an additional gradient (*e.g*., based on additional client data received at the additional client device), at least the second on-device ML layer and a third on-device ML layer of the on-device ML model into the one or more second ML layers. The system may compress the second on-device ML layer and the third on-device ML layer of the on-device ML model into the one or more second ML layers in the same or similar manner, but based on a scheduling signal generated by an on-device scheduling engine of the additional client device and/or received from a remote scheduling engine (*e.g.,* the remote scheduling engine 146 of FIG. 1). Notably, the system compresses the second on-device ML layer into both the one or more first on-device ML layers at block 552 and the one or more second on-device ML layers at block 552A. However, the one or more first on-device ML layers and the one or more second on-device ML layers each include at least one unique on-device ML layer - the first on-device ML layer for the one or more first on-device ML layers and the third on-device ML layer for the one or more second on-device ML layer. Nonetheless, it should be understood that this is for the sake of example and is not meant to be limiting. For instance, the same on-device ML layers can be compressed at disparate client devices (*e.g*., the first on-device ML layer and the second on-device ML layer being compressed into the one or more first ML layers at both the client device and the additional client device), disparate ML layers can be compressed at disparate client devices such that there is at least one unique ML layer compressed at the disparate devices (*e.g*., as described with respect to the operations of block 552 and 552A), and/or disparate ML layers can be compressed at disparate client devices such that there is only unique ML layers compressed at the different devices (*e.g*., the first on-device ML layer and the second on-device ML layer being compressed into the one or more first ML layers at the client device, and the third on-device ML layer and a fourth on-device ML layer being compressed into the one or more second ML layers). Although differences may exist between these disparate ML layers, they are adjacent in the on-device ML model and may include some overlap. Accordingly, by generating the first update and the second update as shared updates, the remote system can leverage this overlap to conserve computational and/or network resources as described herein, thereby resulting in improved efficiency in federated learning.

At block 554, the system generates, at the client device, the first update (*e.g.*, the first update generated at the first iteration of the operations of block 358 of FIG. 3) as a shared update for at least the first on-device ML layer and the second on-device ML layer (*e.g.,* that were compressed into the one or more first on-device ML layers at block 552). The system can generate the first update based on the gradient (*e.g.,* as described with respect to FIG. 3). Further, at block 554A, the system generates, at the additional client device, a second update *(e.g.,* in the same or similar manner as the first update generated at the first iteration of the operations of block 358 of FIG. 3, but at the additional client device and based on additional client data received at the additional client device) as a shared update for at least the second on-device ML layer and the third on-device ML layer (*e.g.,* that were compressed into the one or more second on-device ML layers at block 552A). The system can generate the second update based on the additional gradient (*e.g*., in the same or similar manner as described with respect to FIG. 3).

At block 556, the system causes a first global ML layer of the global ML model (e.g., the global ML model to be updated in FIG. 3) and a second global ML layer of the global ML model to be updated based on the first shared update while at least a third global ML layer is fixed, the first global ML layer being a remote-based counterpart of the first on-device ML layer, the second global ML layer being a remote-based counterpart of the second on-device ML layer, and the third global ML layer being a remote-based counterpart of the third on-device ML layer. At block 558, the system causes the second global ML layer and the third global ML layer to be updated based on the second shared update while at least the first global ML layer is fixed. Put another way, the system may update the first global ML layer based on only the first update, the second global ML layer based on both the first update and the second update, and the third global ML layer based on only the second update.

Turning now to FIG. 6, a flowchart illustrating yet another example method 600 of techniques utilized in achieving efficient federated learning of machine learning (ML) model(s) is depicted. In particular, the method 600 of FIG. 6 illustrates another non-limiting example of generating updates for an on-device ML model (*e.g.,* as described with respect to block 358 of the method 300 of FIG. 3), and causing a counterpart global ML model to be updated based on the updates (*e.g*., as described with respect to block 362 of the method 300 of FIG. 3). For convenience, the operations of the method 600 are described with reference to a system that performs the operations. The system of method 600 includes one or more processors and/or other component(s) of a computing device (*e.g*., client device 150 of FIG. 1, client device 250 of FIG. 2, remote system 160 of FIG. 1, cloud-based automated assistant components 270 of FIG. 2, computing device 810 of FIG. 8, and/or other computing devices). Moreover, while operations of the method 600 are shown in a particular order, this is not meant to be limiting. One or more operations may be reordered, omitted, or added.

At block 652, the system schedules one or more updates for the global ML model (*e.g.,* the global ML model to be updated in FIG. 3). For example, at block 652A, the system causes the client device to generate the first update for one or more *Nth* on-device ML layers of the on-device ML model based on processing the client data received at the client device (*e.g.*, the first update generated at the first iteration of the operations of block 358 of FIG. 3), *N* being a positive integer. Further, at block 652B, the system causes an additional client device to generate a second update for one or more *Nth-1* on-device ML layers of the on-device ML model based on processing additional client data received at the additional client device (*e.g*., in the same or similar manner as the first update generated at the first iteration of the operations of block 358 of FIG. 3, but at the additional client device and based on additional client data received at the additional client device). Put another way, the system may employ a gradient snapshotting technique to improve efficiency of federated learning of ML model(s). The gradient snapshotting technique may be implemented based on corresponding scheduling signals generated by a corresponding on-device scheduling engine of the client device (*e.g*., the on-device scheduling engine 138 of FIG. 1) and/or the additional client device and/or received from a remote scheduling engine (*e.g.,* the remote scheduling engine 146 of FIG. 1). The corresponding scheduling signals may instruct the client device to generate the first update for the one or more *Nth* on-device ML layers of the on-device ML model, the additional client device to generate the second update for the one or more *Nth-1* on-device ML layers of the on-device ML model, a further additional client device to generate a third update for one or more *Nth-2* on-device ML layers of the on-device ML model, and so on. Accordingly, by utilizing the gradient snapshotting technique, the remote system can ensure that an update is generated for each of the *Nth* layers on-device ML model as described herein.

In some implementations, the remote scheduling engine (*e.g.,* the remote scheduling engine 146 of FIG. 1) may divide a superset of client devices into a plurality of subsets. In some versions of those implementations, each of the subsets of client devices may perform an iteration of the gradient snapshotting technique. For example, a first subset of client devices may include a first client device may generate an update for the one or more *Nth* on-device ML layers, a second client device may generate an update for the one or more *Nth-1* on-device ML layers, a third client device may generate an update for the one or more *Nth-2* on-device ML layers, and so on for each of the Nth on-device ML layers. Further, a second subset of client devices may generate an update for each of the Nth on-device ML layers in the same or similar manner.

At block 654, the system causes one or more *Nth* global ML layers of the global ML model (e.g., the global ML model to be updated in FIG. 3) to be updated based on the first update for the one or more Nth on-device ML layers of the on-device ML model while at least one or more *Nth-1* global ML layers of the global ML model are fixed, the one or more *Nth* global ML layers being a remote-based counterpart of the one or more *Nth* on-device ML layers, and the one or more *Nth-1* global ML layers being a remote-based counterpart of the one or more *Nth-1* on-device ML layers. At block 656, the system causes the one or more *Nth-1* global ML layers to be updated based on the second update for the one or more *Nth-1* on-device ML layers of the on-device ML model while at least the one or more of the *Nth* global ML layers of the global ML model are fixed. In some implementations, such as when the remote scheduling engine (e.g., the remote scheduling engine 146 of FIG. 1) divides a superset of client devices into a plurality of subsets as described above, the system may assign a first subset of the client devices to a first iteration of updating of the remote-based counterpart global ML model, a second subset of the client devices to a subsequent second iteration of updating of the remote-based counterpart global ML model, and so on.

Turning now to FIG. 7, a flowchart illustrating an example method of remote system-side operations to achieve efficient federated learning of machine learning (ML) model(s) is depicted. For convenience, the operations of the method 700 are described with reference to a system that performs the operations. The system of method 700 includes one or more processors and/or other component(s) of a computing device (e.g., remote system 160 of FIG. 1, cloud-based automated assistant components 270 of FIG. 2, computing device 810 of FIG. 8, and/or other computing devices). Moreover, while operations of the method 600 are shown in a particular order, this is not meant to be limiting. One or more operations may be reordered, omitted, or added.

At block 752, the system receives, at a remote system and from one or more client devices, one or more updates for a global ML model stored remotely in remote memory of the remote system, the global ML model including a plurality of global ML layers, the plurality of global ML layers including at least one or more first global ML layers and one or more second global ML layers. The one or more updates for the global ML model may be generated at one or more of the client devices in any manner described herein (*e.g.,* with respect to FIGS. 1, 3, 4, 5, and/or 6).

At block 754, the system determines whether one or more update conditions are satisfied for updating the global ML model. The one or more update conditions for updating the global ML model may include, for example, a particular time of day, a particular day of week, whether a threshold quantity of updates are available to update global ML model, and/or whether a threshold quantity of disparate updates is available to update global ML model. If, at an iteration of block 754, the system determines that the one or more update conditions are not satisfied, the system returns to block 752 to receive one or more additional updates from one or more of the client devices. If, at an iteration of block 754, the system determines that the one or more update conditions are satisfied, the system proceeds to block 756.

At block 756, the system causes, based on the one or more updates received from one or more of the client devices, the global ML model to be updated to generate an updated global ML model. For example, at block 756A, the system causes only the one or more first global ML layers to be updated based on a first update received from a client device of the one or more client devices while at least one of the one or more second global ML layers are fixed. Also, for example, at block 756B, the system causes one or more second global ML layers to be updated based on a second update received from an additional client device of the one or more client devices while at least one of the one or more first global ML layers are fixed.

At block 758, the system determines whether one or more client device conditions are satisfied at one or more of the client devices. The one or more client device conditions may include, for example, a particular time of day, a particular day of week, whether the client device is charging, whether the client device has at least a threshold state of charge, whether a temperature of the client device is less than a temperature threshold, and/or whether the client device is being held by a user. If, at an iteration of block 758, the system determines that the one or more client device conditions are not satisfied, then the system continues monitoring for satisfaction of the one or more client device conditions at block 758. Notably, while the system continues monitoring for satisfaction of the one or more client device conditions at block 758, the system may continue updating the global ML model via subsequent iterations of the operations of blocks 752-756. If, at an iteration of block 758, the system determines that the one or more client device conditions are satisfied, then the system proceeds to block 760.

At block 760, the system transmits, to one or more of the client devices, the updated global ML model (*e.g.,* the updated global ML model itself, one or more updated global ML layers of the updated global ML model, or one or more updated global weights of the updated global ML model). Although not depicted for the sake of brevity, one or more of the client devices may only receive the updated global model in response to determining one or more client device conditions are satisfied (*e.g*., as described with respect to the operations of block 360). In response to transmitting the updated global ML model, the client device may cause the on-device ML model to be replaced, in the on-device memory of the client device, the on-device ML model with the updated global ML model, resulting in an updated on-device ML model. However, the client device (and one or more additional client devices) may continue generating additional updates for the updated on-device ML model, and an instance of the updated global ML model may be maintained at the remote system to be further updated based on the additional updates.

Turning now to FIG. 8, a block diagram of an example computing device 810 that may optionally be utilized to perform one or more aspects of techniques described herein is depicted. In some implementations, one or more of a client device, cloud-based automated assistant component(s), and/or other component(s) may comprise one or more components of the example computing device 810.

Computing device 810 typically includes at least one processor 814 which communicates with a number of peripheral devices via bus subsystem 812. These peripheral devices may include a storage subsystem 824, including, for example, a memory subsystem 825 and a file storage subsystem 826, user interface output devices 820, user interface input devices 822, and a network interface subsystem 816. The input and output devices allow user interaction with computing device 810. Network interface subsystem 816 provides an interface to outside networks and is coupled to corresponding interface devices in other computing devices.

User interface input devices 822 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into computing device 810 or onto a communication network.

User interface output devices 820 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from computing device 810 to the user or to another machine or computing device.

Storage subsystem 824 stores programming and data constructs that provide the functionality of some or all of the modules described herein. For example, the storage subsystem 824 may include the logic to perform selected aspects of the methods disclosed herein, as well as to implement various components depicted in FIGS. 1 and 2.

These software modules are generally executed by processor 814 alone or in combination with other processors. Memory 825 used in the storage subsystem 824 can include a number of memories including a main random access memory (RAM) 830 for storage of instructions and data during program execution and a read only memory (ROM) 832 in which fixed instructions are stored. A file storage subsystem 826 can provide persistent storage for program and data files, and may include a hard disk drive, a floppy disk drive along with associated removable media, a CD-ROM drive, an optical drive, or removable media cartridges. The modules implementing the functionality of certain implementations may be stored by file storage subsystem 826 in the storage subsystem 824, or in other machines accessible by the processor(s) 814.

Bus subsystem 812 provides a mechanism for letting the various components and subsystems of computing device 810 communicate with each other as intended. Although bus subsystem 812 is shown schematically as a single bus, alternative implementations of the bus subsystem may use multiple busses.

Computing device 810 can be of varying types including a workstation, server, computing cluster, blade server, server farm, or any other data processing system or computing device. Due to the ever-changing nature of computers and networks, the description of computing device 810 depicted in FIG. 8 is intended only as a specific example for purposes of illustrating some implementations. Many other configurations of computing device 810 are possible having more or fewer components than the computing device depicted in FIG. 8.

In situations in which the systems described herein collect or otherwise monitor personal information about users, or may make use of personal and/or monitored information), the users may be provided with an opportunity to control whether programs or features collect user information (e.g., information about a user's social network, social actions or activities, profession, a user's preferences, or a user's current geographic location), or to control whether and/or how to receive content from the content server that may be more relevant to the user. Also, certain data may be treated in one or more ways before it is stored or used, so that personal identifiable information is removed. For example, a user's identity may be treated so that no personal identifiable information can be determined for the user, or a user's geographic location may be generalized where geographic location information is obtained (such as to a city, ZIP code, or state level), so that a particular geographic location of a user cannot be determined. Thus, the user may have control over how information is collected about the user and/or used.

Various implementations can include a non-transitory computer readable storage medium storing instructions executable by one or more processors (e.g., central processing unit(s) (CPU(s)), graphics processing unit(s) (GPU(s)), digital signal processor(s) (DSP(s)), and/or tensor processing unit(s) (TPU(s)) to perform a method such as one or more of the methods described herein. Other implementations can include an automated assistant client device *(e.g.,* a client device including at least an automated assistant interface for interfacing with cloud-based automated assistant component(s)) that includes processor(s) operable to execute stored instructions to perform a method, such as one or more of the methods described herein. Yet other implementations can include a system of one or more servers that include one or more processors operable to execute stored instructions to perform a method such as one or more of the methods described herein.

## Claims

1. A method implemented by one or more processors (814) of a client device (250), the method comprising:
receiving (352), from a user of the client device, client data, the client data being generated locally at the client device;
processing (354), using an on-device machine learning (ML) model stored locally in on-device memory of the client device, the client data to generate predicted output, wherein the on-device machine learning model includes a plurality of on-device ML layers, and wherein the plurality of on-device ML layers include at least one or more first on-device ML layers and one or more second on-device ML layers;
receiving a scheduling signal from a remote system instructing the client device to generate a first update for the one or more first on-device ML layers;
generating (356), using unsupervised learning, a gradient specific to the one or more first on-device ML layers, based on the predicted output;
generating (358), based on the gradient, the first update for only the one or more first on-device ML layers of the on-device ML model stored locally in the on-device memory of the client device; and
transmitting (362) the first update to the remote system, wherein transmitting the first update to the remote system causes the remote system to update a global ML model stored remotely in remote memory of the remote system, wherein the global ML model includes at least one or more first global ML layers and one or more second global ML layers, and wherein causing the remote system to update the global ML model includes causing the one or more first global ML layers to be updated based on the first update while one or more of the second global ML layers are fixed.

2. The method of claim 1, wherein the first update transmitted to the remote system comprises the gradient and an indication of the one or more first global ML layers to be updated based on the first update, and wherein the one or more first global ML layers of the global ML model stored remotely at the remote system correspond to the one or more first on-device ML layers of the on-device ML model stored locally at the client device; and
optionally wherein causing the one or more first global ML layers to be updated based on the first update while one or more of the second global ML layers are fixed comprises:
causing, based on the gradient and based on the indication of the one or more first global ML layers to be updated based on the first update, the one or more first global ML layers to be updated based on the gradient to generate one or more updated first global ML layers without updating the one or more second global ML layers, the one or more updated first global ML layers including one or more updated first global weights for the one or more updated first global ML layers.

3. The method of any preceding claim, wherein generating the first update for the one or more first on-device ML layers comprises:
causing the one or more first on-device ML layers to be updated based on the gradient to generate one or more updated first on-device ML layers without updating the one or more second on-device ML layers, the one or more updated first on-device ML layers including one or more updated first on-device weights for the one or more updated first on-device ML layers.

4. The method of claim 3, wherein the first update transmitted to the remote system comprises the one or more updated first on-device ML layers and an indication of the one or more first global ML layers to be updated based on the first update, and wherein the one or more first global ML layers of the global ML model stored remotely at the remote system correspond to the one or more first on-device ML layers of the on-device ML model stored locally at the client device;
and optionally wherein causing the one or more first global ML layers to be updated based on the first update while one or more of the second global ML layers are fixed comprises:
causing, based on the one or more updated first on-device ML layers and based on the indication of the one or more first global ML layers to be updated based on the first update, the one or more first global ML layers to be replaced in the remote memory with the one or more updated first on-device ML layers without replacing the one or more second global ML layers.

5. The method of claim 3, wherein the first update transmitted to the remote system comprises the one or more updated first on-device weights for the one or more updated first on-device ML layers and an indication of the one or more first global ML layers to be updated based on the first update, and wherein the one or more first global ML layers of the global ML model stored remotely at the remote system correspond to the one or more first on-device ML layers of the on-device ML model stored locally at the client device;
and optionally wherein causing the one or more first global ML layers to be updated based on the first update while one or more of the second global ML layers are fixed comprises:
causing, based on the one or more updated first on-device weights for the one or more updated first on-device ML layers and based on the indication of the one or more first global ML layers to be updated based on the first update, one or more first global weights for the one or more first global ML layers to be replaced in the remote memory of the remote system with the one or more updated first on-device weights for the one or more updated first on-device ML layers without replacing one or more second global weights for the one or more second global ML layers.

6. The method of any preceding claim, wherein causing the remote system to update the global ML model further comprises causing the one or more second global ML layers to be updated based on a second update while one or more of the first global ML layers are fixed, and wherein the second update is transmitted to the remote system from an additional client device that is in addition to the client device utilized to generate the first update.

7. The method of claim 6, further comprising:
receiving {366), at the client device and from the remote system, an updated global ML model, the updated global ML model including at least the one or more updated first global ML layers and the one or more updated second global ML layers; and
replacing, in the on-device memory of the client device, the on-device ML model with the updated global ML model;
and optionally, wherein receiving the updated global ML model is in response to:
determining {364) one or more remote system conditions are satisfied at the remote system, wherein the one or more remote system conditions include one or more of: a particular time of day, a particular day of week, whether a threshold quantity of updates have been utilized to update the updated global ML model, or whether performance of the updated global ML model satisfies a performance threshold; and optionally,
determining {364) one or more client device conditions are satisfied at the client device, wherein the one or more client device conditions include one or more of: a particular time of day, a particular day of week, whether the client device is charging, whether the client device has at least a threshold state of charge, whether a temperature of the client device is less than a temperature threshold, or whether the client device is being held by a user.

8. The method of claim 7, wherein the updated global ML model received at the client device and from the remote system comprises one or more of:
the updated global ML model that, when received, causes the client device to replace, in the on-device memory of the client device, the on-device ML model with the updated global ML model;
the one or more updated first global ML layers that, when received, causes the client device to replace, in the on-device memory of the client device, the one or more first on-device ML layers with the one or more updated first global ML layers;
the one or more updated second global ML layers that, when received, causes the client device to replace, in the on-device memory of the client device, the one or more second on-device ML layers with the one or more updated second global ML layers;
one or more updated first global weights for the one or more updated first global ML layers that, when received, causes the client device to replace, in the on-device memory of the client device, one or more first local weights for the one or more first on-device ML layers with the one or more updated first global weights; or
one or more updated second global weights for the one or more updated second global ML layers that, when received, causes the client device to replace, in the on-device memory of the client device, one or more second local weights for the one or more second on-device ML layers with the one or more updated second global weights.

9. The method of claim 1, further comprising:
identifying (452) a target portion of the client data, the target portion of the client data being subsequent to a prepended portion of the client data that is received prior to the target portion, and the target portion of the client data being prior to an appended portion of the client data that is received subsequent to the target portion;
masking (454) the target portion of the client data; and
wherein processing the client data using the on-device ML model to generate the predicted output comprises processing (456) the prepended portion of the client data and the appended portion of the client data to generate one or more of a predicted target portion of the client data that is predicted to correspond to the target portion of the client data;
and optionally wherein generating the gradient based on the predicted output using unsupervised learning comprises:
comparing (458) the predicted target portion of the client data to the target portion of the client data; and
generating (460) the gradient based on comparing the predicted target portion to the target portion.

10. The method of claim 1, wherein the one or more first on-device ML layers include at least a first on-device ML layer and a second on-device ML layer, the method further comprising:
prior to generating the gradient based on the predicted output:
compressing (552) the first on-device ML layer and the second on-device ML layer into the one or more first on-device ML layers, wherein the first update for the one or more on-device ML layers is a first shared update for the first on-device ML layer and the second on-device ML layer;
and optionally:
wherein causing the one or more first global ML layers to be updated based on the first update while one or more of the second global ML layers are fixed comprises:
utilizing the first update to update a first global ML layer corresponding to the first on-device ML layer; and
utilizing the first update to update a second global ML layer corresponding to the second on-device ML layer;
or, wherein the one or more second on-device ML layers include at least the second on-device ML layer and a third on-device ML layer, wherein the second on-device ML layer and the third on-device ML layer are compressed at the additional client device into the one or more second on-device ML layers at the additional client device, and wherein a second update generated locally at the additional client device is a shared second update for the second on-device ML layer and the third on-device ML layer;
or, wherein causing the remote system to update the global ML model further comprises causing the one or more second global ML layers to be updated based on the second update while one or more of the first global ML layers are fixed, and wherein causing the one or more of the second global ML layers to be updated based on the second update while one or more of the first global ML layers are fixed comprises:
utilizing the second update to update the second global ML layer corresponding to the second on-device ML layer; and
utilizing the second update to update a third global ML layer corresponding to the third on-device ML layer.

11. A method (700) implemented by one or more processors of a remote system, the method comprising:
providing a first scheduling signal from the remote system instructing a client device to generate a first update for one or more first on-device ML layers;
providing a second scheduling signal from the remote system instructing an additional client device to generate a second update for one or more second on-device ML layers;
receiving (752), from the client device of a user and at the remote system, the first update for a global machine learning (ML) model stored remotely at the remote system,
wherein the global ML model includes a plurality of global ML layers, and
wherein the first update for the global ML model is only for the one or more first global ML layers, of the plurality of global ML layers, of the global ML model;
receiving (752), from the additional client device of an additional user and at the remote system, the second update for the global ML model stored remotely in remote memory of the remote system,
wherein the second update for the global ML model is only for the one or more second global ML layers, of the plurality of global ML layers, of the global ML model, and
wherein the one or more second global ML layers of the global ML model are distinct from the one or more first global ML layers of the global ML model;
causing (756), based on at least the first update received from the client device and the second update received from the additional client device, the global ML model to be updated to generate an updated global ML model; and
in response to determining (758) one or more conditions are satisfied:
transmitting (760) the updated global ML model to one or more of: the client device, the additional client device, or one or more further additional client devices.

12. The method of claim 11, wherein causing the global ML model to be updated to generate the updated global ML model comprises:
causing (756A) only the one or more first global ML layers to be updated based on the first update while the one or more second global ML layers are fixed to generate one or more updated first global ML layers;
causing (756B) only the one or more second global ML layers to be updated based on the second update while the one or more first global ML layers are fixed to generate one or more updated second global ML layers; and
combining the one or more updated first global ML layers and the one or more second global ML layers to generate the updated global ML model;
or, wherein causing the global ML model to be updated to generate an updated global ML model based on at least the first update received from the client device and the second update received from the additional client device is in response to determining one or more update conditions are satisfied, wherein the one or more update conditions include one or more of: a particular time of day, a particular day of week, whether a threshold quantity of updates are available to update global ML model, or whether a threshold quantity of disparate updates are available to update global ML model;
or wherein the remote system corresponds to a remote server or a cluster of remote servers.

13. The method of claim 12, wherein causing only the one or more first global ML layers to be updated based on the first update while the one or more second global ML layers are fixed and causing only the one or more second global ML layers to be updated based on the second update while the one or more first global ML layers are fixed occurs during a same iteration of updating the global ML model;
or, wherein causing only the one or more first global ML layers to be updated based on the first update while the one or more second global ML layers are fixed occurs during a first iteration of updating the global ML model, wherein causing only the one or more second global ML layers to be updated based on the second update while the one or more first global ML layers are fixed occurs during a second iteration of updating the global ML model, and wherein the second iteration of updating the global ML model is distinct from the first iteration of updating the global ML model.

14. A system (810) comprising: at least one processor (814); a memory (825) storing instructions that, when executed, cause the at least one processor to perform operations corresponding to any one of claims 1 to 13.

15. A non-transitory computer-readable storage medium (825) storing instructions that, when executed, cause at least one processor to perform operations corresponding to any one of claims 1 to 13.

## Patentansprüche

1. Verfahren, das durch einen oder mehrere Prozessoren (814) einer Client-Vorrichtung (250) implementiert wird, wobei das Verfahren umfasst:
Empfangen (352) von Client-Daten von einem Benutzer der Client-Vorrichtung, wobei die Client-Daten lokal an der Client-Vorrichtung erzeugt werden;
Verarbeiten (354) der Client-Daten unter Verwendung eines geräteinternen Maschinenlernmodells (ML-Modell), das lokal in einem geräteinternen Speicher der Client-Vorrichtung gespeichert ist, um eine vorhergesagte Ausgabe zu erzeugen, wobei das geräteinterne Maschinenlernmodell eine Vielzahl von geräteinternen ML-Schichten beinhaltet, und wobei die Vielzahl von geräteinternen ML-Schichten mindestens eine oder mehrere erste geräteinterne ML-Schichten und eine oder mehrere zweite geräteinterne ML-Schichten beinhaltet;
Empfangen eines Planungssignals von einem entfernten System, das die Client-Vorrichtung anweist, eine erste Aktualisierung für die eine oder mehreren ersten geräteinternen ML-Schichten zu erzeugen;
Erzeugen (356), unter Verwendung von unüberwachtem Lernen, eines Gradienten, der spezifisch für die eine oder mehreren ersten geräteinternen ML-Schichten ist, basierend auf der vorhergesagten Ausgabe;
Erzeugen (358), basierend auf dem Gradienten, der ersten Aktualisierung nur für die eine oder mehreren ersten geräteinternen ML-Schichten des geräteinternen ML-Modells, das lokal in dem geräteinternen Speicher der Client-Vorrichtung gespeichert ist; und
Übertragen (362) der ersten Aktualisierung an das entfernte System, wobei das Übertragen der ersten Aktualisierung an das entfernte System bewirkt, dass das entfernte System ein globales ML-Modell aktualisiert, das entfernt in einem entfernten Speicher des entfernten Systems gespeichert ist, wobei das globale ML-Modell mindestens eine oder mehrere erste globale ML-Schichten und eine oder mehrere zweite globale ML-Schichten beinhaltet, und wobei das Bewirken, dass das entfernte System das globale ML-Modell aktualisiert, ein Bewirken beinhaltet, dass die eine oder mehreren ersten globalen ML-Schichten basierend auf der ersten Aktualisierung aktualisiert werden, während eine oder mehrere der zweiten globalen ML-Schichten fixiert sind.

2. Verfahren nach Anspruch 1, wobei die an das entfernte System übertragene erste Aktualisierung den Gradienten und eine Angabe der einen oder mehreren ersten globalen ML-Schichten umfasst, die basierend auf der ersten Aktualisierung aktualisiert werden sollen, und wobei die eine oder mehreren ersten globalen ML-Schichten des globalen ML-Modells, das entfernt an dem entfernten System gespeichert ist, der einen oder den mehreren ersten geräteinternen ML-Schichten des geräteinternen ML-Modells entsprechen, das lokal an der Client-Vorrichtung gespeichert ist; und
wobei optional das Bewirken, dass die eine oder mehreren ersten globalen ML-Schichten basierend auf der ersten Aktualisierung aktualisiert werden, während eine oder mehrere der zweiten globalen ML-Schichten fixiert sind, umfasst:
Bewirken, basierend auf dem Gradienten und basierend auf der Angabe der einen oder mehreren ersten globalen ML-Schichten, die basierend auf der ersten Aktualisierung aktualisiert werden sollen, dass die eine oder mehreren ersten globalen ML-Schichten basierend auf dem Gradienten aktualisiert werden, um eine oder mehrere aktualisierte erste globale ML-Schichten zu erzeugen, ohne die eine oder mehreren zweiten globalen ML-Schichten zu aktualisieren, wobei die eine oder mehreren aktualisierten ersten globalen ML-Schichten ein oder mehrere aktualisierte erste globale Gewichte für die eine oder mehreren aktualisierten ersten globalen ML-Schichten beinhalten.

3. Verfahren nach einem der vorhergehenden Ansprüche, wobei das Erzeugen der ersten Aktualisierung für die eine oder mehreren ersten geräteinternen ML-Schichten umfasst:
Bewirken, dass die eine oder mehreren ersten geräteinternen ML-Schichten basierend auf dem Gradienten aktualisiert werden, um eine oder mehrere aktualisierte erste geräteinterne ML-Schichten zu erzeugen, ohne die eine oder mehreren zweiten geräteinternen ML-Schichten zu aktualisieren, wobei die eine oder mehreren aktualisierten ersten geräteinternen ML-Schichten ein oder mehrere aktualisierte erste geräteinterne Gewichte für die eine oder mehreren aktualisierten ersten geräteinternen ML-Schichten beinhalten.

4. Verfahren nach Anspruch 3, wobei die an das entfernte System übertragene erste Aktualisierung die eine oder mehreren aktualisierten ersten geräteinternen ML-Schichten und eine Angabe der einen oder mehreren ersten globalen ML-Schichten, die basierend auf der ersten Aktualisierung aktualisiert werden sollen, umfasst, und wobei die eine oder mehreren ersten globalen ML-Schichten des globalen ML-Modells, das entfernt an dem entfernten System gespeichert ist, der einen oder den mehreren ersten geräteinternen ML-Schichten des geräteinternen ML-Modells entsprechen, das lokal an der Client-Vorrichtung gespeichert ist;
und wobei optional das Bewirken, dass die eine oder mehreren ersten globalen ML-Schichten basierend auf der ersten Aktualisierung aktualisiert werden, während eine oder mehrere der zweiten globalen ML-Schichten fixiert sind, umfasst:
Bewirken, basierend auf der einen oder den mehreren aktualisierten ersten geräteinternen ML-Schichten und basierend auf der Angabe der einen oder mehreren ersten globalen ML-Schichten, die basierend auf der ersten Aktualisierung aktualisiert werden sollen, dass die eine oder mehreren ersten globalen ML-Schichten in dem entfernten Speicher durch die eine oder mehreren aktualisierten ersten geräteinternen ML-Schichten ersetzt werden, ohne die eine oder mehreren zweiten globalen ML-Schichten zu ersetzen.

5. Verfahren nach Anspruch 3, wobei die an das entfernte System übertragene erste Aktualisierung das eine oder die mehreren aktualisierten ersten geräteinternen Gewichte für die eine oder mehreren aktualisierten ersten geräteinternen ML-Schichten und eine Angabe der einen oder mehreren ersten globalen ML-Schichten, die basierend auf der ersten Aktualisierung aktualisiert werden sollen, umfasst, und wobei die eine oder mehreren ersten globalen ML-Schichten des globalen ML-Modells, das entfernt an dem entfernten System gespeichert ist, der einen oder den mehreren ersten geräteinternen ML-Schichten des geräteinternen ML-Modells entsprechen, das lokal an der Client-Vorrichtung gespeichert ist;
und wobei optional das Bewirken, dass die eine oder mehreren ersten globalen ML-Schichten basierend auf der ersten Aktualisierung aktualisiert werden, während eine oder mehrere der zweiten globalen ML-Schichten fixiert sind, umfasst:
Bewirken, basierend auf dem einen oder den mehreren aktualisierten ersten geräteinternen Gewichten für die eine oder mehreren aktualisierten ersten geräteinternen ML-Schichten und basierend auf der Angabe der einen oder mehreren ersten globalen ML-Schichten, die basierend auf der ersten Aktualisierung aktualisiert werden sollen, dass ein oder mehrere erste globale Gewichte für die eine oder mehreren ersten globalen ML-Schichten in dem entfernten Speicher des entfernten Systems durch das eine oder die mehreren aktualisierten ersten geräteinternen Gewichte für die eine oder mehreren aktualisierten ersten geräteinternen ML-Schichten ersetzt werden, ohne ein oder mehrere zweite globale Gewichte für die eine oder mehreren zweiten globalen ML-Schichten zu ersetzen.

6. Verfahren nach einem der vorhergehenden Ansprüche, wobei das Bewirken, dass das entfernte System das globale ML-Modell aktualisiert, ferner ein Bewirken umfasst, dass die eine oder mehreren zweiten globalen ML-Schichten basierend auf einer zweiten Aktualisierung aktualisiert werden, während eine oder mehrere der ersten globalen ML-Schichten fixiert sind, und wobei die zweite Aktualisierung von einer zusätzlichen Client-Vorrichtung, die zusätzlich zu der Client-Vorrichtung ist, die verwendet wird, um die erste Aktualisierung zu erzeugen, an das entfernte System übertragen wird.

7. Verfahren nach Anspruch 6, ferner umfassend:
Empfangen (366), an der Client-Vorrichtung und von dem entfernten System, eines aktualisierten globalen ML-Modells, wobei das aktualisierte globale ML-Modell mindestens die eine oder mehreren aktualisierten ersten globalen ML-Schichten und die eine oder mehreren aktualisierten zweiten globalen ML-Schichten beinhaltet; und
Ersetzen, in dem geräteinternen Speicher der Client-Vorrichtung, des geräteinternen ML-Modells durch das aktualisierte globale ML-Modell;
und wobei optional das Empfangen des aktualisierten globalen ML-Modells als Reaktion erfolgt auf:
Bestimmen (364), dass eine oder mehrere entfernte Systembedingungen an dem entfernten System erfüllt sind, wobei die eine oder mehreren entfernten Systembedingungen eines oder mehreres beinhalten von: einer bestimmten Tageszeit, einem bestimmten Wochentag, ob eine Schwellenmenge von Aktualisierungen verwendet wurde, um das aktualisierte globale ML-Modell zu aktualisieren, oder ob eine Leistung des aktualisierten globalen ML-Modells einen Leistungsschwellenwert erfüllt; und optional,
Bestimmen (364), dass eine oder mehrere Client-Vorrichtungsbedingungen an der Client-Vorrichtung erfüllt sind, wobei die eine oder mehreren Client-Vorrichtungsbedingungen eines oder mehreres beinhalten von: einer bestimmten Tageszeit, einem bestimmten Wochentag, ob die Client-Vorrichtung lädt, ob die Client-Vorrichtung mindestens einen Schwellenwertladezustand aufweist, ob eine Temperatur der Client-Vorrichtung niedriger als ein Temperaturschwellenwert ist, oder ob die Client-Vorrichtung von einem Benutzer gehalten wird.

8. Verfahren nach Anspruch 7, wobei das aktualisierte globale ML-Modell, das an der Client-Vorrichtung und von dem entfernten System empfangen wird, eines oder mehreres umfasst von:
dem aktualisierten globalen ML-Modell, das, wenn es empfangen wird, bewirkt, dass die Client-Vorrichtung in dem geräteinternen Speicher der Client-Vorrichtung das geräteinterne ML-Modell durch das aktualisierte globale ML-Modell ersetzt;
der einen oder den mehreren aktualisierten ersten globalen ML-Schichten, die, wenn sie empfangen werden, bewirken, dass die Client-Vorrichtung in dem geräteinternen Speicher der Client-Vorrichtung die eine oder mehreren ersten geräteinternen ML-Schichten durch die eine oder mehreren aktualisierten ersten globalen ML-Schichten ersetzt;
der einen oder den mehreren aktualisierten zweiten globalen ML-Schichten, die, wenn sie empfangen werden, bewirken, dass die Client-Vorrichtung in dem geräteinternen Speicher der Client-Vorrichtung die eine oder mehreren zweiten geräteinternen ML-Schichten durch die eine oder mehreren aktualisierten zweiten globalen ML-Schichten ersetzt;
einem oder mehreren aktualisierten ersten globalen Gewichten für die eine oder mehreren aktualisierten ersten globalen ML-Schichten, die, wenn sie empfangen werden, bewirken, dass die Client-Vorrichtung in dem geräteinternen Speicher der Client-Vorrichtung ein oder mehrere erste lokale Gewichte für die eine oder mehreren ersten geräteinternen ML-Schichten durch das eine oder die mehreren aktualisierten ersten globalen Gewichte ersetzt; oder
einem oder mehreren aktualisierten zweiten globalen Gewichten für die eine oder mehreren aktualisierten zweiten globalen ML-Schichten, die, wenn sie empfangen werden, bewirken, dass die Client-Vorrichtung in dem geräteinternen Speicher der Client-Vorrichtung ein oder mehrere zweite lokale Gewichte für die eine oder mehreren zweiten geräteinternen ML-Schichten durch das eine oder die mehreren aktualisierten zweiten globalen Gewichte ersetzt.

9. Verfahren nach Anspruch 1, ferner umfassend:
Identifizieren (452) eines Zielabschnitts der Client-Daten, wobei der Zielabschnitt der Client-Daten auf einen vorangestellten Abschnitt der Client-Daten folgt, der vor dem Zielabschnitt empfangen wird, und wobei der Zielabschnitt der Client-Daten vor einem angehängten Abschnitt der Client-Daten liegt, der nach dem Zielabschnitt empfangen wird;
Maskieren (454) des Zielabschnitts der Client-Daten; und
wobei das Verarbeiten der Client-Daten unter Verwendung des geräteinternen ML-Modells, um die vorhergesagte Ausgabe zu erzeugen, ein Verarbeiten (456) des vorangestellten Abschnitts der Client-Daten und des angehängten Abschnitts der Client-Daten umfasst, um einen oder mehrere von einem vorhergesagten Zielabschnitt der Client-Daten zu erzeugen, von dem vorhergesagt wird, dass er dem Zielabschnitt der Client-Daten entspricht;
und wobei optional das Erzeugen des Gradienten basierend auf der vorhergesagten Ausgabe unter Verwendung von unüberwachtem Lernen umfasst:
Vergleichen (458) des vorhergesagten Zielabschnitts der Client-Daten mit dem Zielabschnitt der Client-Daten; und
Erzeugen (460) des Gradienten basierend auf einem Vergleichen des vorhergesagten Zielabschnitts mit dem Zielabschnitt.

10. Verfahren nach Anspruch 1, wobei die eine oder mehreren ersten geräteinternen ML-Schichten mindestens eine erste geräteinterne ML-Schicht und eine zweite geräteinterne ML-Schicht beinhalten, wobei das Verfahren ferner umfasst:
vor dem Erzeugen des Gradienten basierend auf der vorhergesagten Ausgabe:
Komprimieren (552) der ersten geräteinternen ML-Schicht und der zweiten geräteinternen ML-Schicht in die eine oder mehreren ersten geräteinternen ML-Schichten, wobei die erste Aktualisierung für die eine oder mehreren geräteinternen ML-Schichten eine erste gemeinsame Aktualisierung für die erste geräteinterne ML-Schicht und die zweite geräteinterne ML-Schicht ist;
und optional:
wobei das Bewirken, dass die eine oder mehreren ersten globalen ML-Schichten basierend auf der ersten Aktualisierung aktualisiert werden, während eine oder mehrere der zweiten globalen ML-Schichten fixiert sind, umfasst:
Verwenden der ersten Aktualisierung zum Aktualisieren einer ersten globalen ML-Schicht, die der ersten geräteinternen ML-Schicht entspricht; und
Verwenden der ersten Aktualisierung zum Aktualisieren einer zweiten globalen ML-Schicht, die der zweiten geräteinternen ML-Schicht entspricht;
oder wobei die eine oder mehreren zweiten geräteinternen ML-Schichten mindestens die zweite geräteinterne ML-Schicht und eine dritte geräteinterne ML-Schicht beinhalten, wobei die zweite geräteinterne ML-Schicht und die dritte geräteinterne ML-Schicht an der zusätzlichen Client-Vorrichtung in die eine oder mehreren zweiten geräteinternen ML-Schichten an der zusätzlichen Client-Vorrichtung komprimiert werden, und wobei eine zweite Aktualisierung, die lokal an der zusätzlichen Client-Vorrichtung erzeugt wird, eine gemeinsame zweite Aktualisierung für die zweite geräteinterne ML-Schicht und die dritte geräteinterne ML-Schicht ist;
oder wobei das Bewirken, dass das entfernte System das globale ML-Modell aktualisiert, ferner ein Bewirken umfasst, dass die eine oder mehreren zweiten globalen ML-Schichten basierend auf der zweiten Aktualisierung aktualisiert werden, während eine oder mehrere der ersten globalen ML-Schichten fixiert sind, und wobei das Bewirken, dass die eine oder mehreren zweiten globalen ML-Schichten basierend auf der zweiten Aktualisierung aktualisiert werden, während eine oder mehrere der ersten globalen ML-Schichten fixiert sind, umfasst:
Verwenden der zweiten Aktualisierung zum Aktualisieren der zweiten globalen ML-Schicht, die der zweiten geräteinternen ML-Schicht entspricht; und
Verwenden der zweiten Aktualisierung zum Aktualisieren einer dritten globalen ML-Schicht, die der dritten geräteinternen ML-Schicht entspricht.

11. Verfahren (700), das durch einen oder mehrere Prozessoren eines entfernten Systems implementiert wird, wobei das Verfahren umfasst:
Bereitstellen eines ersten Planungssignals von dem entfernten System, das eine Client-Vorrichtung anweist, eine erste Aktualisierung für eine oder mehrere erste geräteinterne ML-Schichten zu erzeugen;
Bereitstellen eines zweiten Planungssignals von dem entfernten System, das eine zusätzliche Client-Vorrichtung anweist, eine zweite Aktualisierung für eine oder mehrere zweite geräteinterne ML-Schichten zu erzeugen;
Empfangen (752), von der Client-Vorrichtung eines Benutzers und an dem entfernten System, der ersten Aktualisierung für ein globales Maschinenlernmodell (ML-Modell), das entfernt an dem entfernten System gespeichert ist,
wobei das globale ML-Modell eine Vielzahl globaler ML-Schichten umfasst, und
wobei die erste Aktualisierung für das globale ML-Modell nur für die eine oder mehreren ersten globalen ML-Schichten der Vielzahl von globalen ML-Schichten des globalen ML-Modells ist;
Empfangen (752), von der zusätzlichen Client-Vorrichtung eines zusätzlichen Benutzers und an dem entfernten System, der zweiten Aktualisierung für das globale ML-Modell, das entfernt in einem entfernten Speicher des entfernten Systems gespeichert ist,
wobei die zweite Aktualisierung für das globale ML-Modell nur für die eine oder mehreren zweiten globalen ML-Schichten der Vielzahl von globalen ML-Schichten des globalen ML-Modells ist, und
wobei die eine oder mehreren zweiten globalen ML-Schichten des globalen ML-Modells von der einen oder den mehreren ersten globalen ML-Schichten des globalen ML-Modells verschieden sind;
Bewirken (756), basierend auf zumindest der ersten Aktualisierung, die von der Client-Vorrichtung empfangen wird, und der zweiten Aktualisierung, die von der zusätzlichen Client-Vorrichtung empfangen wird, dass das globale ML-Modell aktualisiert wird, um ein aktualisiertes globales ML-Modell zu erzeugen; und
als Reaktion auf das Bestimmen (758), dass eine oder mehrere Bedingungen erfüllt sind:
Übertragen (760) des aktualisierten globalen ML-Modells an eines oder mehreres von: der Client-Vorrichtung, der zusätzlichen Client-Vorrichtung oder einer oder mehreren weiteren zusätzlichen Client-Vorrichtungen.

12. Verfahren nach Anspruch 11, wobei das Bewirken, dass das globale ML-Modell aktualisiert wird, um das aktualisierte globale ML-Modell zu erzeugen, umfasst:
Bewirken (756A), dass nur die eine oder mehreren ersten globalen ML-Schichten basierend auf der ersten Aktualisierung aktualisiert werden, während die eine oder mehreren zweiten globalen ML-Schichten fixiert sind, um eine oder mehrere aktualisierte erste globale ML-Schichten zu erzeugen;
Bewirken (756B), dass nur die eine oder mehreren zweiten globalen ML-Schichten basierend auf der zweiten Aktualisierung aktualisiert werden, während die eine oder mehreren ersten globalen ML-Schichten fixiert sind, um eine oder mehrere aktualisierte zweite globale ML-Schichten zu erzeugen; und
Kombinieren der einen oder mehreren aktualisierten ersten globalen ML-Schichten und der einen oder mehreren zweiten globalen ML-Schichten, um das aktualisierte globale ML-Modell zu erzeugen;
oder wobei das Bewirken, dass das globale ML-Modell aktualisiert wird, um ein aktualisiertes globales ML-Modell basierend auf zumindest der ersten Aktualisierung, die von der Client-Vorrichtung empfangen wird, und der zweiten Aktualisierung, die von der zusätzlichen Client-Vorrichtung empfangen wird, zu erzeugen, als Reaktion auf ein Bestimmen erfolgt, dass eine oder mehrere Aktualisierungsbedingungen erfüllt sind, wobei die eine oder mehreren Aktualisierungsbedingungen eines oder mehreres beinhalten von: einer bestimmten Tageszeit, einem bestimmten Wochentag, ob eine Schwellenmenge von Aktualisierungen verfügbar ist, um das globale ML-Modell zu aktualisieren, oder ob eine Schwellenmenge von unterschiedlichen Aktualisierungen verfügbar ist, um das globale ML-Modell zu aktualisieren;
oder wobei das entfernte System einem entfernten Server oder einem Cluster von entfernten Servern entspricht.

13. Verfahren nach Anspruch 12, wobei das Bewirken, dass nur die eine oder mehreren ersten globalen ML-Schichten basierend auf der ersten Aktualisierung aktualisiert werden, während die eine oder mehreren zweiten globalen ML-Schichten fixiert sind, und das Bewirken, dass nur die eine oder mehreren zweiten globalen ML-Schichten basierend auf der zweiten Aktualisierung aktualisiert werden, während die eine oder mehreren ersten globalen ML-Schichten fixiert sind, während einer selben Iteration eines Aktualisierens des globalen ML-Modells erfolgt; oder wobei das Bewirken, dass nur die eine oder mehreren ersten globalen ML-Schichten basierend auf der ersten Aktualisierung aktualisiert werden, während die eine oder mehreren zweiten globalen ML-Schichten fixiert sind, während einer ersten Iteration eines Aktualisierens des globalen ML-Modells erfolgt, wobei das Bewirken, dass nur die eine oder mehreren zweiten globalen ML-Schichten basierend auf der zweiten Aktualisierung aktualisiert werden, während die eine oder mehreren ersten globalen ML-Schichten fixiert sind, während einer zweiten Iteration eines Aktualisierens des globalen ML-Modells erfolgt, und wobei die zweite Iteration eines Aktualisierens des globalen ML-Modells von der ersten Iteration eines Aktualisierens des globalen ML-Modells verschieden ist.

14. System (810), umfassend:
mindestens einen Prozessor (814); einen Speicher (825), der Anweisungen speichert, die, wenn sie ausgeführt werden, den mindestens einen Prozessor veranlassen, Operationen entsprechend einem der Ansprüche 1 bis 13 auszuführen.

15. Nichtflüchtiges computerlesbares Speichermedium (825), das Anweisungen speichert, die, wenn sie ausgeführt werden, bewirken, dass mindestens ein Prozessor Operationen entsprechend einem der Ansprüche 1 bis 13 ausführt.

## Revendications

1. Procédé mis en œuvre par un ou plusieurs processeurs (814) d'un dispositif client (250), le procédé comprenant :
la réception (352), provenant d'un utilisateur du dispositif client, de données client, les données client étant générées localement sur le dispositif client ;
le traitement (354), à l'aide d'un modèle d'apprentissage machine (ML) sur dispositif stocké localement dans une mémoire sur dispositif du dispositif client, des données client pour générer une sortie prédite, dans lequel le modèle d'apprentissage machine sur dispositif comporte une pluralité de couches ML sur dispositif, et dans lequel la pluralité de couches ML sur dispositif comporte au moins une ou plusieurs premières couches ML sur dispositif et une ou plusieurs deuxièmes couches ML sur dispositif ;
la réception d'un signal de planification provenant d'un système distant demandant au dispositif client de générer une première mise à jour pour les une ou plusieurs premières couches ML sur dispositif ;
la génération (356), à l'aide de l'apprentissage non supervisé, d'un gradient spécifique aux une ou plusieurs premières couches ML sur dispositif, sur la base de la sortie prédite ;
la génération (358), sur la base du gradient, de la première mise à jour uniquement pour les une ou plusieurs premières couches ML sur dispositif du modèle ML sur dispositif stocké localement dans la mémoire sur dispositif du dispositif client ; et
la transmission (362) de la première mise à jour au système distant, dans lequel la transmission de la première mise à jour au système distant amène le système distant à mettre à jour un modèle ML global stocké à distance dans la mémoire distante du système distant, dans lequel le modèle ML global comporte au moins une ou plusieurs premières couches ML globales et une ou plusieurs deuxièmes couches ML globales, et dans lequel le fait d'amener le système distant à mettre à jour le modèle ML global comporte le fait d'amener la mise à jour des une ou plusieurs premières couches ML globales sur la base de la première mise à jour tandis qu'une ou plusieurs des deuxièmes couches ML globales restent fixes.

2. Procédé selon la revendication 1, dans lequel la première mise à jour transmise au système distant comprend le gradient et une indication des une ou plusieurs premières couches ML globales à mettre à jour sur la base de la première mise à jour, et dans lequel les une ou plusieurs premières couches ML globales du modèle ML global stocké à distance sur le système distant correspondent aux une ou plusieurs premières couches ML sur dispositif du modèle ML sur dispositif stocké localement sur le dispositif client ; et
éventuellement, dans lequel le fait d'amener la mise à jour des une ou plusieurs premières couches ML globales sur la base de la première mise à jour, tandis qu'une ou plusieurs des deuxièmes couches ML globales restent fixes, comprend :
le fait d'amener, sur la base du gradient et sur la base de l'indication des une ou plusieurs premières couches ML globales à mettre à jour sur la base de la première mise à jour, la mise à jour des une ou plusieurs premières couches ML globales sur la base du gradient pour générer une ou plusieurs premières couches ML globales mises à jour sans mettre à jour les une ou plusieurs deuxièmes couches ML globales, les une ou plusieurs premières couches ML globales mises à jour comportant un ou plusieurs premiers poids globaux mis à jour pour les une ou plusieurs premières couches ML globales mises à jour.

3. Procédé selon une quelconque revendication précédente, dans lequel la génération de la première mise à jour pour les une ou plusieurs premières couches ML sur dispositif comprend :
le fait d'amener la mise à jour des une ou plusieurs premières couches ML sur dispositif sur la base du gradient pour générer une ou plusieurs premières couches ML sur dispositif mises à jour sans mettre à jour les une ou plusieurs deuxièmes couches ML sur dispositif, les une ou plusieurs premières couches ML sur dispositif mises à jour comportant un ou plusieurs premiers poids sur dispositif mis à jour pour les une ou plusieurs premières couches ML sur dispositif mises à jour.

4. Procédé selon la revendication 3, dans lequel la première mise à jour transmise au système distant comprend les une ou plusieurs premières couches ML sur dispositif mises à jour et une indication des une ou plusieurs premières couches ML globales à mettre à jour sur la base de la première mise à jour, et dans lequel les une ou plusieurs premières couches ML globales du modèle ML global stocké à distance sur le système distant correspondent aux une ou plusieurs premières couches ML sur dispositif du modèle ML sur dispositif stocké localement sur le dispositif client ;
et éventuellement, dans lequel le fait d'amener la mise à jour des une ou plusieurs premières couches ML globales sur la base de la première mise à jour, tandis qu'une ou plusieurs des deuxièmes couches ML globales restent fixes, comprend :
le fait d'amener, sur la base des une ou plusieurs premières couches ML sur dispositif mises à jour et sur la base de l'indication des une ou plusieurs premières couches ML globales à mettre à jour sur la base de la première mise à jour, le remplacement des une ou plusieurs premières couches ML globales dans la mémoire distante par les une ou plusieurs premières couches ML sur dispositif mises à jour, sans remplacement des une ou plusieurs deuxièmes couches ML globales.

5. Procédé selon la revendication 3, dans lequel la première mise à jour transmise au système distant comprend les un ou plusieurs premiers poids sur dispositif mis à jour pour les une ou plusieurs premières couches ML sur dispositif mises à jour et une indication des une ou plusieurs premières couches ML globales à mettre à jour sur la base de la première mise à jour, et dans lequel les une ou plusieurs premières couches ML globales du modèle ML global stocké à distance sur le système distant correspondent aux une ou plusieurs premières couches ML sur dispositif du modèle ML sur dispositif stocké localement sur le dispositif client ;
et éventuellement, dans lequel le fait d'amener la mise à jour des une ou plusieurs premières couches ML globales sur la base de la première mise à jour, tandis qu'une ou plusieurs des deuxièmes couches ML globales restent fixes, comprend :
le fait d'amener, sur la base des un ou plusieurs premiers poids sur dispositif mis à jour pour les une ou plusieurs premières couches ML sur dispositif mises à jour et sur la base de l'indication des une ou plusieurs premières couches ML globales à mettre à jour sur la base de la première mise à jour, le remplacement d'un ou de plusieurs premiers poids globaux pour les une ou plusieurs premières couches ML globales dans la mémoire distante du système distant par les un ou plusieurs premiers poids sur dispositif mis à jour pour les une ou plusieurs premières couches ML sur dispositif mises à jour, sans remplacement d'un ou de plusieurs seconds poids globaux pour les une ou plusieurs deuxièmes couches ML globales.

6. Procédé selon une quelconque revendication précédente, dans lequel le fait d'amener le système distant à mettre à jour le modèle ML global comprend en outre le fait d'amener la mise à jour des une ou plusieurs deuxièmes couches ML globales sur la base d'une seconde mise à jour, tandis qu'une ou plusieurs des premières couches ML globales restent fixes, et dans lequel la seconde mise à jour est transmise au système distant à partir d'un dispositif client supplémentaire qui s'ajoute au dispositif client utilisé pour générer la première mise à jour.

7. Procédé selon la revendication 6, comprenant en outre :
la réception {366), sur le dispositif client et en provenance du système distant, d'un modèle ML global mis à jour, le modèle ML global mis à jour comportant au moins les une ou plusieurs premières couches ML globales mises à jour et les une ou plusieurs deuxièmes couches ML globales mises à jour ; et
le remplacement, dans la mémoire sur dispositif du dispositif client, du modèle ML sur dispositif par le modèle ML global mis à jour ;
et, éventuellement, dans lequel la réception du modèle ML global mis à jour est une réponse :
au fait de déterminer {364) qu'une ou plusieurs conditions de système distant sont satisfaites au niveau du système distant, dans lequel les une ou plusieurs conditions de système distant comportent un ou plusieurs des éléments suivants : une heure précise de la journée, un jour précis de la semaine, si une quantité seuil de mises à jour a été utilisée pour mettre à jour le modèle ML global mis à jour, ou si les performances du modèle ML global mis à jour satisfont à un seuil de performance ; et éventuellement,
au fait de déterminer {364) qu'une ou plusieurs conditions de dispositif client sont satisfaites au niveau du dispositif client, dans lequel les une ou plusieurs conditions de dispositif client comportent un ou plusieurs des éléments suivants : une heure précise de la journée, un jour précis de la semaine, si le dispositif client est en charge, si le dispositif client a au moins un état de charge seuil, si la température du dispositif client est inférieure à un seuil de température, ou si le dispositif client est tenu par un utilisateur.

8. Procédé selon la revendication 7, dans lequel le modèle ML global mis à jour, reçu sur le dispositif client et en provenance du système distant, comprend un ou plusieurs des éléments suivants :
le modèle ML global mis à jour qui, lorsqu'il est reçu, amène le dispositif client à remplacer, dans la mémoire sur dispositif du dispositif client, le modèle ML sur dispositif par le modèle ML global mis à jour ;
les une ou plusieurs premières couches ML globales mises à jour qui, lorsqu'elles sont reçues, amènent le dispositif client à remplacer, dans la mémoire sur dispositif du dispositif client, les une ou plusieurs premières couches ML sur dispositif par les une ou plusieurs premières couches ML globales mises à jour ;
les une ou plusieurs deuxièmes couches ML globales mises à jour qui, lorsqu'elles sont reçues, amènent le dispositif client à remplacer, dans la mémoire sur dispositif du dispositif client, les une ou plusieurs deuxièmes couches ML sur dispositif par les une ou plusieurs deuxièmes couches ML globales mises à jour ;
un ou plusieurs premiers poids globaux mis à jour pour les une ou plusieurs premières couches ML globales mises à jour qui, lorsqu'ils sont reçus, amènent le dispositif client à remplacer, dans la mémoire sur dispositif du dispositif client, un ou plusieurs premiers poids locaux pour les une ou plusieurs premières couches ML sur dispositif par les un ou plusieurs premiers poids globaux mis à jour ; ou
un ou plusieurs seconds poids globaux mis à jour pour les une ou plusieurs deuxièmes couches ML globales mises à jour qui, lorsqu'ils sont reçus, amènent le dispositif client à remplacer, dans la mémoire sur dispositif du dispositif client, un ou plusieurs seconds poids locaux pour les une ou plusieurs deuxièmes couches ML sur dispositif par les un ou plusieurs seconds poids globaux mis à jour.

9. Procédé selon la revendication 1, comprenant en outre :
l'identification (452) d'une partie cible des données client, la partie cible des données client étant postérieure à une partie préfixée des données client qui est reçue avant la partie cible, et la partie cible des données client étant antérieure à une partie ajoutée des données client qui est reçue après la partie cible ;
le masquage (454) de la partie cible des données client ; et
dans lequel le traitement des données client à l'aide du modèle ML sur dispositif pour générer la sortie prédite comprend le traitement (456) de la partie préfixée des données client et de la partie ajoutée des données client pour générer une ou plusieurs d'une partie cible prédite des données client qui est censée correspondre à la partie cible des données client ;
et, éventuellement, dans lequel la génération du gradient sur la base de la sortie prédite à l'aide d'un apprentissage non supervisé comprend :
la comparaison (458) de la partie cible prédite des données client à la partie cible des données client ; et
la génération (460) du gradient sur la base de la comparaison de la partie cible prédite à la partie cible.

10. Procédé selon la revendication 1, dans lequel les une ou plusieurs premières couches ML sur dispositif comportent au moins une première couche ML sur dispositif et une deuxième couche ML sur dispositif, le procédé comprenant en outre :
avant de générer le gradient sur la base de la sortie prédite :
la compression (552) de la première couche ML sur dispositif et de la deuxième couche ML sur dispositif en les une ou plusieurs premières couches ML sur dispositif, dans lequel la première mise à jour pour les une ou plusieurs couches ML sur dispositif est une première mise à jour partagée pour la première couche ML sur dispositif et la deuxième couche ML sur dispositif ;
et éventuellement :
dans lequel le fait d'amener la mise à jour des une ou plusieurs premières couches ML globales sur la base de la première mise à jour, tandis qu'une ou plusieurs des deuxièmes couches ML globales restent fixes, comprend :
l'utilisation de la première mise à jour pour mettre à jour une première couche ML globale correspondant à la première couche ML sur dispositif ; et
l'utilisation de la première mise à jour pour mettre à jour une deuxième couche ML globale correspondant à la deuxième couche ML sur dispositif ;
ou, dans lequel les une ou plusieurs deuxièmes couches ML sur dispositif comportent au moins la deuxième couche ML sur dispositif et une troisième couche ML sur dispositif, dans lequel la deuxième couche ML sur dispositif et la troisième couche ML sur dispositif sont compressées sur le dispositif client supplémentaire en les une ou plusieurs deuxièmes couches ML sur dispositif sur le dispositif client supplémentaire, et dans lequel une seconde mise à jour générée localement sur le dispositif client supplémentaire est une seconde mise à jour partagée pour la deuxième couche ML sur dispositif et la troisième couche ML sur dispositif ;
ou, dans lequel le fait d'amener la mise à jour du modèle ML global par le système distant comprend en outre le fait d'amener la mise à jour des une ou plusieurs deuxièmes couches ML globales sur la base de la seconde mise à jour, tandis qu'une ou plusieurs des premières couches ML globales restent fixes, et dans lequel le fait d'amener la mise à jour des une ou plusieurs des deuxièmes couches ML globales sur la base de la seconde mise à jour, tandis qu'une ou plusieurs des premières couches ML globales restent fixes, comprend :
l'utilisation de la seconde mise à jour pour mettre à jour la deuxième couche ML globale correspondant à la deuxième couche ML sur dispositif ; et
l'utilisation de la seconde mise à jour pour mettre à jour une troisième couche ML globale correspondant à la troisième couche ML sur dispositif.

11. Procédé (700) mis en œuvre par un ou plusieurs processeurs d'un système distant, le procédé comprenant :
la fourniture d'un premier signal de planification provenant du système distant demandant à un dispositif client de générer une première mise à jour pour une ou plusieurs premières couches ML sur dispositif ;
la fourniture d'un second signal de planification provenant du système distant demandant à un dispositif client supplémentaire de générer une seconde mise à jour pour une ou plusieurs deuxièmes couches ML sur dispositif ;
la réception (752), en provenance du dispositif client d'un utilisateur et sur le système distant, de la première mise à jour pour un modèle d'apprentissage machine (ML) global stocké à distance sur le système distant,
dans lequel le modèle ML global comporte une pluralité de couches ML globales, et
dans lequel la première mise à jour pour le modèle ML global ne concerne que les une ou plusieurs premières couches ML globales, parmi la pluralité de couches ML globales, du modèle ML global ;
la réception (752), à partir du dispositif client supplémentaire d'un utilisateur supplémentaire et sur le système distant, de la seconde mise à jour pour le modèle ML global stocké à distance dans la mémoire distante du système distant,
dans lequel la seconde mise à jour pour le modèle ML global ne concerne que les une ou plusieurs deuxièmes couches ML globales, parmi la pluralité de couches ML globales, du modèle ML global, et
dans lequel les une ou plusieurs deuxièmes couches ML globales du modèle ML global sont distinctes des une ou plusieurs premières couches ML globales du modèle ML global ;
le fait d'amener (756), sur la base au moins de la première mise à jour reçue en provenance du dispositif client et de la seconde mise à jour reçue en provenance du dispositif client supplémentaire, la mise à jour du modèle ML global pour générer un modèle ML global mis à jour ; et
en réponse au fait de déterminer (758) qu'une ou plusieurs conditions sont satisfaites :
la transmission (760) du modèle ML global mis à jour à un ou plusieurs des éléments suivants : le dispositif client, le dispositif client supplémentaire ou un ou plusieurs autres dispositifs clients supplémentaires.

12. Procédé selon la revendication 11, dans lequel le fait d' amener la mise à jour du modèle ML global pour générer le modèle ML global mis à jour comprend :
le fait d'amener (756A) la mise à jour uniquement des une ou plusieurs premières couches ML globales sur la base de la première mise à jour, tandis que les une ou plusieurs deuxièmes couches ML globales restent fixes pour générer une ou plusieurs premières couches ML globales mises à jour ;
le fait d'amener (756B) la mise à jour uniquement des une ou plusieurs deuxièmes couches ML globales sur la base de la seconde mise à jour, tandis que les une ou plusieurs premières couches ML globales restent fixes pour générer une ou plusieurs deuxièmes couches ML globales mises à jour ; et
la combinaison des une ou plusieurs premières couches ML globales mises à jour et des une ou plusieurs deuxièmes couches ML globales pour générer le modèle ML global mis à jour ;
ou, dans lequel le fait d'amener la mise à jour du modèle ML global pour générer un modèle ML global mis à jour sur la base au moins de la première mise à jour reçue en provenance du dispositif client et de la seconde mise à jour reçue en provenance du dispositif client supplémentaire, est une réponse au fait de déterminer qu'une ou plusieurs conditions de mise à jour sont satisfaites, dans lequel les une ou plusieurs conditions de mise à jour comportent un ou plusieurs des éléments suivants : une heure précise de la journée, un jour précis de la semaine, si une quantité seuil de mises à jour sont disponibles pour mettre à jour le modèle ML global, ou si une quantité seuil de mises à jour disparates sont disponibles pour mettre à jour le modèle ML global ;
ou dans lequel le système distant correspond à un serveur distant ou à un groupe de serveurs distants.

13. Procédé selon la revendication 12, dans lequel le fait d' amener la mise à jour uniquement des une ou plusieurs premières couches ML globales sur la base de la première mise à jour, tandis que les une ou plusieurs deuxièmes couches ML globales restent fixes, et le fait d'amener la mise à jour uniquement des une ou plusieurs deuxièmes couches ML globales sur la base de la seconde mise à jour, tandis que les une ou plusieurs premières couches ML globales restent fixes, se produit au cours d'une même itération de mise à jour du modèle ML global ;
ou, dans lequel le fait d'amener la mise à jour uniquement des une ou plusieurs premières couches ML globales sur la base de la première mise à jour, tandis que les une ou plusieurs deuxièmes couches ML globales restent fixes, se produit au cours d'une première itération de mise à jour du modèle ML global, dans lequel le fait d'amener la mise à jour uniquement des une ou plusieurs deuxièmes couches ML globales sur la base de la seconde mise à jour, tandis que les une ou plusieurs premières couches ML globales restent fixes, se produit au cours d'une seconde itération de mise à jour du modèle ML global, et dans lequel la seconde itération de mise à jour du modèle ML global est distincte de la première itération de mise à jour du modèle ML global.

14. Système (810) comprenant :
au moins un processeur (814) ; une mémoire (825) stockant des instructions qui, lorsqu'elles sont exécutées, amènent l'au moins un processeur à réaliser des opérations correspondant à l'une quelconque des revendications 1 à 13.

15. Support de stockage non transitoire lisible par ordinateur (825) stockant des instructions qui, lorsqu'elles sont exécutées, amènent au moins un processeur à réaliser des opérations correspondant à l'une quelconque des revendications 1 à 13.
